# EUROPÄISCHE PATENTANMELDUNG

(11) **EP 4 376 270 A1**
(43) Veröffentlichungstag der Anmeldung: **29.05.2024**
(21) Anmeldenummer: 23212030.3
(22) Anmeldetag: 24.11.2023
(51) Int. Cl.: H02K 5/20, F04D 29/58, H02K 7/14, H02K 11/33

(54) **PUMPE-MOTOR-EINHEIT MIT INTEGRIERTER KÜHLUNG EINER ELEKTRONIKKOMPONENTE**

(30) Priorität: 25.11.2022 DE 102022131277
(71) Anmelder: Schwäbische Hüttenwerke Automotive GmbH, 73433 Aalen (DE)
(72) Erfinder: Baur, Dominik, 72516 Scheer (DE)
(74) Vertreter: SSM Sandmair

(57) **Zusammenfassung**

Eine Pumpe-Motor-Einheit umfasst ein Gehäuse mit einem Motorraum, einem Elektronikraum und einem Pumpenraum, ein im Pumpenraum drehbares Förderrad (1), einen im Motorraum angeordneten elektrischen Antriebsmotor (7, 8) für das Förderrad und eine im Elektronikraum angeordnete Elektronikkomponente (41). Das Gehäuse umfasst eine den Antriebsmotor (7, 8) umgebende Gehäuseumfangswand (11), eine axial zwischen dem Motorraum und dem Elektronikraum angeordnete Kühlstruktur (30) und einen ringförmigen Kühlkanal (33), der mit einem Pumpenraumbereich höheren Drucks und einem Pumpenraumbereich geringeren Drucks verbunden ist, um Fluid zur Kühlung der Elektronikkomponente (41) vom Pumpenraumbereich höheren Drucks über den Kühlkanal (33) zum Pumpenraumbereich geringeren Drucks zu leiten. Die Kühlstruktur (30) ist mit der Gehäuseumfangswand (11) gefügt und bildet mit dieser um eine Längsachse (R) der Gehäuseumfangswand (11) einen Fügespalt (A). Der Kühlkanal (33) ist im Fügespalt (A) um die Längsachse (R) erstreckt und abgedichtet.

## Beschreibung

Die Erfindung betrifft eine Pumpe-Motor-Einheit zur Förderung eines Fluids, von dem innerhalb der Pumpe-Motor-Einheit ein Teilstrom zur Kühlung einer elektronischen Komponente der Einheit abgezweigt wird. Insbesondere betrifft die Erfindung eine Pumpe-Motor-Einheit, bei der eine Kühlmittelpumpe zur Förderung eines Kühlmittels, vorzugsweise eines flüssigen Kühlmittels, und ein Motor zum Antrieb der Pumpe in einem gemeinsamen Gehäuse angeordnet sind. Als Kühlmittelpumpe kann die Einheit insbesondere zur Förderung einer wasserbasierten Kühlflüssigkeit konfiguriert sein. Die Elektronikkomponente kann insbesondere Bestandteil einer elektronischen Steuerung und/oder Regelung für den Antriebsmotor sein, wobei von der Steuerung und/oder Regelung zumindest die zu kühlende Elektronikkomponente im gemeinsamen Gehäuse angeordnet ist. Zweckmäßigerweise ist die gesamte Steuerung und/oder Regelung im gemeinsamen Gehäuse angeordnet. Ein bevorzugtes Anwendungsgebiet ist die Kraftfahrzeugtechnik, wo die Pumpe-Motor-Einheit beispielsweise zur Förderung eines flüssigen Kühlmittels zur Kühlung eines Verbrennungsmotors oder zur Kühlung eines Batteriesystems oder einer Brennstoffzelle eines elektrischen Antriebsmotors oder in Hybridfahrzeugen zur Kühlung beider Antriebssysteme dienen kann.

Bei Kühlmittelpumpen sind in kompakter Bauweise oftmals eine Pumpe, ein Antriebsmotor für die Pumpe und eine Steuerung für den Antriebsmotor in einem gemeinsamen Gehäuse vereint. Zur Kühlung leistungselektronischer Komponenten der Steuerung wird ein Teilstrom des von solch einer Pumpe-Motor-Einheit geförderten Kühlmittels im Gehäuse in einen Hochdruckbereich der Pumpe abgezweigt und durch eine Kühlstruktur geleitet, um die Kühlstruktur und damit die elektronischen Komponenten zu kühlen. Nach dem Durchströmen der Kühlstruktur wird das Kühlmittel in einen Niederdruckbereich der Pumpe zurückgeführt, so dass ein geschlossener, in Bezug auf die Pumpe-Motor-Einheit interner Kühlkreislauf erhalten wird. Die Erfindung betrifft insbesondere derartige Pumpe-Motor-Einheiten mit integriertem Kühlkreislauf.

Die EP 0 831 236 B2 schlägt beispielsweise vor, die Kühlstruktur mittels einer Kühlplatte zu bilden, in der ein Kanal verläuft, der zur Kühlung der Kühlplatte und dadurch der elektronischen Komponenten vom abgezweigten Kühlmittel durchflossen wird. Die Herstellung des Kühlkanals in der Kühlplatte wird nicht beschrieben.

Die DE 10 2018 126 775 A1 offenbart eine Pumpe-Motor-Einheit mit einer zweiteiligen Kühlstruktur. Die Kühlstruktur umfasst eine Platte mit einem Kühlkanal, der mäanderförmig an einer vom Motor axial abgewandten und einer Steuerung zugewandten Stirnseite verläuft. Die Kühlstruktur umfasst daher auch eine Deckplatte, die den mäanderförmigen Kühlkanal stirnseitig abdeckt und mit den Elektronikkomponenten der Steuerung in einem Kühlkontakt steht. Das durch den Kühlkanal geführte Kühlmittel kühlt somit die Deckplatte und dadurch die Elektronik.

Aus der US 9,618,011 B2 ist ebenfalls eine Kühlstruktur für elektronische Komponenten einer Pumpe-Motor-Einheit bekannt. Auch diese Kühlstruktur ist plattenförmig und mehrteilig. Sie weist einen zentralen Fluidraum und quer gebohrte Zu- und Abführungen auf, in denen das der Kühlung dienende Fluid vom Hochdruckbereich der Pumpe zum zentralen Fluidraum und aus diesem zum Niederdruckbereich geführt wird. Der Fluidraum wird von einem Deckelelement zum Motor hin verschlossen.

Die aus dem Stand der Technik bekannten integrierten Kühlungen für die jeweilige Leistungselektronik benötigen zusätzliche Bauteile, wie etwa eine Deckplatte zur Abdeckung eines stirnseitig offenen Kühlkanals, oder erfordern das Bohren von Querkanälen zu einem zentralen Fluidraum, wobei der Fluidraum im Gehäuse und die Querkanäle außen am Gehäuse verschlossen werden müssen, oder es wird nicht beschrieben, wie der Kühlkanal in der Kühlplatte hergestellt wird.

Es ist daher eine Aufgabe der Erfindung, eine Pumpe-Motor-Einheit mit einer konstruktiv einfachen, dennoch effektiven integrierten Kühlung einer elektronischen Komponente der Einheit bereitzustellen.

Die Erfindung betrifft eine Pumpe-Motor-Einheit, die ein Gehäuse mit einem Pumpenraum, einem Motorraum und einem Elektronikraum umfasst. Der Pumpenraum weist einen Pumpenraumbereich geringeren Drucks mit einem Fluideintritt und einen Pumpenraumbereich höheren Drucks mit einem Fluidaustritt für ein von der Einheit zu förderndes Fluid auf. Die Pumpe-Motor-Einheit umfasst ein Förderrad, das im Pumpenraum um eine Pumpendrehachse drehbar angeordnet ist, und einen im Motorraum angeordneten elektrischen Antriebsmotor für das Förderrad. Der Antriebsmotor weist einen Stator und einen Rotor auf, der um eine Motordrehachse drehbar und mit dem Förderrad für dessen Drehantrieb gekoppelt ist. Bei Drehantrieb des Förderrads wird das Fluid am Fluideintritt angesaugt, durchströmt den Pumpenraum und wird am Fluidaustritt mit erhöhtem Druck ausgestoßen.

Die Pumpe-Motor-Einheit umfasst ferner wenigstens eine Elektronikkomponente, die im Elektronikraum angeordnet ist. Zweckmäßigerweise ist eine elektronische Steuerung für den Antriebsmotor der Einheit mit den entsprechenden Elektronikkomponenten im Elektronikraum des Gehäuses angeordnet. Mit dem Begriff "Steuerung" soll eine Steuerung im engeren Sinne, also eine reine Steuerung ohne Rückführung einer Regelgröße, und auch eine Regelung für den Antriebsmotor umfasst sein.

Das Gehäuse umfasst eine Gehäuseumfangswand, die den Antriebsmotor umgibt, eine Kühlstruktur und einen Kühlkanal zur Kühlung der einen oder optional mehreren Elektronikkomponenten, die im Elektronikraum angeordnet ist oder sind. Der Kühlkanal weist einen Kühlkanaleinlass, der mit dem Pumpenraumbereich höheren Drucks verbunden ist, und einen Kühlkanalauslass auf, der mit dem Pumpenraumbereich geringeren Drucks verbunden ist. Zur Kühlung wird im Pumpenraumbereich höheren Drucks ein Teilstrom des von der Pumpe-Motor-Einheit geförderten Fluids abgezweigt und als interner Kühlstrom zum Kühlkanaleinlass geführt. Das abgezweigte Fluid durchströmt den Kühlkanal und wird über den Kühlkanalauslass in den Pumpenraumbereich geringeren Drucks zurückgeführt. Der Druckunterschied zwischen dem Pumpenraumbereich höheren Drucks und dem Pumpenraumbereich geringeren Drucks sorgt für die Durchströmung des Kühlkanals.

Unter einem ersten Aspekt der Erfindung, dem Aspekt der konstruktiven Vereinfachung der integrierten Kühlung, ist die Kühlstruktur separat von der Gehäuseumfangswand geformt und mit der Gehäuseumfangswand gefügt, beispielsweise mittels einer Schraubverbindung. Die Kühlstruktur und die den Motorraum umgebende Gehäuseumfangswand bilden miteinander einen Fügespalt, der sich um eine zentrale Längsachse der Gehäuseumfangswand erstreckt. Nach der Erfindung ist der Kühlkanal ringförmig und im Bereich des Fügespalts um die Längsachse erstreckt und abgedichtet. Die Bildung des Kühlkanals im Fügespalt von Gehäuseumfangswand und Kühlstruktur vereinfacht die Konstruktion und die Montage von Komponenten des integrierten Kühlkreislaufs und verringert den zur Schaffung des Kühlkanals erforderlichen Bauraum. So muss beispielsweise kein Bauteil zusätzlich bereitgestellt und montiert werden, um den Kühlkanal zu schließen.

Der Kühlkanal wird in vorteilhaften Ausführungen durch das Fügen der Fügestrukturen, der Kühlstruktur mit der Gehäuseumfangswand, geschlossen. Sind eine oder mehrere Dichtungen zur Abdichtung des Kühlkanals vorgesehen, kann oder können diese an der Gehäuseumfangswand oder der Kühlstruktur oder auch eine Dichtung an der Gehäuseumfangswand und eine andere an der Kühlstruktur in einem vorgelagerten Montageschritt montiert werden, so dass der Kühlkanal durch das Fügen von Kühlstruktur und Gehäuseumfangswand auch bereits abgedichtet wird.

Die Kühlstruktur kann aus mehreren separat gefertigten Unterstrukturen gefügt sein. Vorteilhafter ist es jedoch, wenn die Kühlstruktur nicht aus Unterstrukturen gefügt, sondern eine einteilig geformte und in diesem Sinne monolithische Struktur ist. Sie kann in einem Verfahren der Urformung in einem Stück geformt sein, beispielsweise als ein Gussteil, was eine nachfolgende Bearbeitung, wie etwa eine spanende Bearbeitung nicht ausschließt. Bevorzugt ist die Kühlstruktur eine Metallstruktur, wie etwa eine Metallgussstruktur.

Um den Kühlkanal zu bilden, kann eine der miteinander gefügten Fügestrukturen, nämlich die Gehäuseumfangswand oder die Kühlstruktur, eine Vertiefung an einer im Fügespalt befindlichen Fügefläche aufweisen. Die andere Fügestruktur überlappt diese Fügefläche und überlappt somit auch die Vertiefung. Zur Bildung des Kühlkanals können auch beide Fügestrukturen im Fügespalt jeweils eine Vertiefung aufweisen, wobei die beiden Vertiefungen einander im Fügespalt zumindest teilweise überlappen und dadurch den Kühlkanal im gefügten Zustand gemeinsam bilden können.

Im Fügespalt kann der Kühlkanal auch auf einfache Weise seitlich abgedichtet werden. Eine Abdichtung kann beispielsweise durch eine entsprechende Passung der Fügestrukturen erzielt werden. Bevorzugter wird der Kühlkanal jedoch mittels einer im Fügespalt angeordneten Dichtung abgedichtet.

Die Dichtung kann einteilig sein und zwei Dichtringe oder Dichtlippen aufweisen, die nebeneinander von einem Dichtungsbasiskörper vorragen, so dass insgesamt beispielsweise ein U-förmiges oder V-förmiges Dichtungsprofil erhalten wird. Zwischen den Dichtringen oder Dichtlippen wird eine Vertiefung erhalten, die im gefügten Zustand zur Kühlstruktur hin offen ist und den Kühlkanal bildet. Im Fügespalt liegen die beiden Dichtringe oder Dichtlippen an einer Fügefläche der Kühlstruktur in jeweils einem Dichtkontakt an. Es bedarf in derartigen Ausführungen keiner Vertiefung in der Gehäuseumfangswand und/oder der Kühlstruktur.

Bevorzugt ist die Dichtung aber mehrteilig und umfasst ein erstes Dichtungselement, das den Fügespalt an einer Seite des Kühlkanals abdichtet, und ein hiervon separates zweites Dichtungselement, das den Fügespalt an der anderen Seite des Kühlkanals abdichtet.

Der Kühlkanaleinlass und der Kühlkanalauslass können radial außerhalb eines den Antriebsmotor einhüllenden Hüllkreiszylinders liegen, wobei die Längsachse der Gehäuseumfangswand zugleich die zentrale Längsachse des virtuellen Hüllkreiszylinders sein kann. Die Pumpe-Motor-Einheit umfasst einen Zuführkanal, der den Kühlkanal mit dem Pumpenraumbereich höheren Drucks verbindet und in den Kühlkanaleinlass mündet, und einen Rückführkanal, der den Kühlkanal mit dem Pumpenraumbereich geringeren Drucks verbindet und sich in Bezug auf die Strömungsrichtung an den Kühlkanalauslass anschließt, also in den Kühlkanalauslass mündet. In bevorzugten Ausführungen erstrecken sich der Zuführkanal bis zum Kühlkanaleinlass und der Rückführkanal bis zum Kühlkanalauslass peripher vom Antriebsmotor durch die Gehäuseumfangswand. Für die Kühlung der einen oder mehreren Elektronikkomponenten bedarf es daher keiner besonderen Konstruktionsmerkmale beim Antriebsmotor, der frei von Einschränkungen durch die integrierte Kühlung gestaltet und im Gehäuse angeordnet werden kann.

In bevorzugten Ausführungen erstreckt sich der Kühlkanal zumindest über den überwiegenden Teil seiner Länge radial außerhalb des virtuellen Hüllkreiszylinders. Vorteilhaft ist, wenn sich der Kühlkanal über seinen gesamten Verlauf radial außerhalb des Hüllkreiszylinders erstreckt. Hierdurch kann auch mit einem nur ringförmigen Kühlkanal eine lange Kühlstrecke mit entsprechend hoher Kühlleistung bereitgestellt werden. Dabei kann ein außerhalb des Hüllkreiszylinders erstreckter Kühlkanal vorteilhafterweise in Kombination mit einem außerhalb des Hüllkreiszylinders liegenden Kühlkanaleinlass und einem außerhalb des Hüllkreiszylinders liegenden Kühlkanalauslass verwirklicht sein.

Im Sinne einer hohen Kühlleistung ist es vorteilhaft, wenn sich der Kühlkanal vom Kühlkanaleinlass bis zum Kühlkanalauslass über einen Bogenwinkel von wenigstens 270° um die Längsachse der Gehäuseumfangswand erstreckt. In vorteilhaften Ausführungen erstreckt sich der Kühlkanal vom Kühlkanaleinlass in Richtung auf den Kühlkanalauslass in nur eine Umfangsrichtung bzw. Strömungsrichtung, so dass sich die Strömung im Kühlkanal nicht teilt und auf unterschiedlichen Strömungswegen zum Kühlkanalauslass strömt, sondern das Fluid den Kühlkanal in nur eine Umfangsrichtung bzw. Strömungsrichtung durchströmt. Der Kühlkanal kann sich im Fügespalt spiralig über einen Bogenwinkel von mehr als 360° erstrecken, bevorzugter erstreckt er sich jedoch nur über einen Bogenwinkel von weniger als 360° und somit in nur einer Kühlkanalschleife um die Längsachse der Gehäuseumfangswand. In bevorzugten Ausführungen liegen der Kühlkanaleinlass und der Kühlkanalauslass um die Längsachse über einen Bogenwinkel von maximal 90° oder maximal 60° auseinander. Andererseits weisen sie in vorteilhaften Ausführungen voneinander in Umfangsrichtung um die Längsachse einen Abstand auf, der groß genug ist, um über diesen Abstand eine fluidische Trennung im Fügespalt zu gewährleisten. Dabei können der Kühlkanaleinlass und der Kühlkanalauslass im Fügespalt einen Abstand insbesondere in Umfangsrichtung voneinander aufweisen.

Der Kühlkanal kann sich im Fügespalt mäanderförmig um die Längsachse der Gehäuseumfangswand erstrecken. Die Herstellung wäre jedoch mit zusätzlichem Aufwand verbunden. Zudem würde sich der Strömungswiderstand erhöhen. Es ist daher vorteilhafter, wenn der Kühlkanal zusätzlich zu der durch den umlaufenden Fügespalt aufgeprägten Krümmung um die Längsachse der Gehäuseumfangswand nicht noch um eine oder mehrere weitere Achsen gekrümmt ist.

Der Fügespalt kann ein rein axialer Fügespalt sein, also ein Fügespalt, den ausschließlich eine oder mehrere Stirnflächen der Gehäuseumfangswand und eine oder mehrere Stirnflächen der Kühlstruktur bilden, indem sich die eine oder mehreren Stirnflächen der Gehäuseumfangswand und der Kühlstruktur über den Fügespalt axial zugewandt gegenüberliegen. Die Gehäuseumfangswand und die Kühlstruktur können im axialen Fügespalt mit Kontakt axial aneinander liegen. Alternativ kann der Fügespalt eine lichte, wenn auch geringe axiale Spaltweite haben. Der Kühlkanal kann an seinen beiden Seiten jeweils mittels einer im überlappenden Stirnwandbereich angeordneten Axialdichtung, beispielsweise mittels eines radial äußeren Axialdichtungsrings und eines radial inneren Axialdichtungsrings, abgedichtet sein.

In alternativen Ausführungen kann der Fügespalt ein rein radialer Fügespalt sein, indem sich eine oder mehrere Umfangsflächen der Gehäuseumfangswand und eine oder mehrere Umfangsflächen der Kühlstruktur radial zugewandt gegenüberliegen. Die Gehäuseumfangswand und die Kühlstruktur können im radialen Fügespalt mit Kontakt radial aneinander liegen. Alternativ kann der Fügespalt eine lichte, wenn auch geringe radiale Spaltweite haben. Der Kühlkanal kann an seinen beiden Seiten jeweils mittels einer im überlappenden Umfangswandbereich angeordneten Radialdichtung, beispielsweise mittels eines rechten Radialdichtungsrings und eines linken Radialdichtungsrings, abgedichtet sein.

In bevorzugten Ausführungen erstreckt sich der Fügespalt sowohl in axialer Richtung, d.h. in Richtung der Längsachse des Gehäuses, als auch radial zur Längsachse des Gehäuses und umfasst in derartigen Ausführungen einen in der axialen Überlappung erhaltenen radialen Fügespaltabschnitt und einen in der radialen Überlappung erhaltenen axialen Fügespaltabschnitt. Der Kühlkanal kann bei solch einem "über Eck" erstreckten Fügespalt vorteilhafterweise an einer Seite mittels einer im überlappenden Umfangswandbereich angeordneten Radialdichtung, beispielsweise in Form eines Radialdichtungsrings, und an der anderen Seite mittels einer im überlappenden Stirnwandbereich angeordneten Axialdichtung, beispielsweise in Form eines Axialdichtungsrings, abgedichtet sein.

Der Kühlkanal als solcher kann sich beispielsweise nur in einem überlappenden Stirnwandbereich, also in einem axialen Fügespalt oder Fügespaltabschnitt, oder nur in einem überlappenden Umfangswandbereich, also in einem radialen Fügespalt oder Fügespaltabschnitt, erstrecken. In Ausführungen, in denen sich der Fügespalt "über Eck" erstreckt, kann der Kühlkanal gekröpft sein, sich also ebenfalls "über Eck" erstrecken. Falls in einem "über Eck" erstreckten Fügespalt die Kühlstruktur die Gehäuseumfangswand umgreift, kann die Gehäuseumfangswand im umgriffenen Bereich an dem im Fügespalt befindlichen Stirnende auch einfach abgeschrägt oder stufig ausgenommen sein, um den Kühlkanal zu bilden.

Das Gehäuse umfasst einen Pumpenraum-Abschnitt, der den Pumpenraum und somit auch das Förderrad begrenzt und insbesondere umgeben kann, einen Motorraum-Abschnitt, der den Motorraum und somit auch den Antriebsmotor umgibt, und einen Elektronikraum-Abschnitt, der die Elektronikkomponente und gegebenenfalls weitere Elektronikkomponenten beispielsweise einer Steuerung für den Motor, begrenzt und insbesondere umgeben kann. Der Antriebsmotor kann als Nassläufer oder als Trockenläufer ausgeführt und betrieben werden. Insbesondere für Ausführungen als Trockenläufer ist die integrierte Kühlung der Elektronikkomponente und gegebenenfalls weiterer Elektronikkomponenten vorteilhaft.

Die Kühlstruktur kann beispielsweise eine Ringstruktur sein, die sich axial zwischen dem Motorraum und dem Elektronikraum erstreckt und mit dem Motorraum und/oder mit dem Elektronikraum axial überlappen kann. In bevorzugten Ausführungen weist die Kühlstruktur eine Stirnwand auf. Sie kann sogar als einfache Stirnwand gebildet sein. Sie kann den Motorraum an einer Stirnseite abschließen und vom Elektronikraum trennen, wobei allerdings Verbindungsleitungen zur Versorgung des Antriebsmotors mit elektrischer Energie und/oder Steuerungssignalen durch die Stirnwand geführt sein können. In vorteilhafter Ausführung verhindert eine derartige Kühlstruktur jedoch weitestgehend, dass Abrieb und/oder Flüssigkeit vom Motorraum in den Elektronikraum gelangen kann.

In bevorzugten Ausführungen umfasst die Kühlstruktur wie gesagt eine Kühlstruktur-Stirnwand, die für die eine oder die mehreren zu kühlenden Elektronikkomponenten als Trägerstruktur dienen kann. Zweckmäßigerweise ist die Elektronikkomponente oder sind die mehreren Elektronikkomponenten über ein thermisch gut leitendes Material, beispielsweise ein Wärmeleitpad, an der Kühlstruktur-Stirnwand, d.h. an der vom Motorraum abgewandten Rückseite der Kühlstruktur-Stirnwand angeordnet. Insbesondere kann die Kühlstruktur eine Kühlstruktur-Stirnwand mit einer axialen Abragung, beispielsweise in Form einer von der Kühlstruktur-Stirnwand axial vorragenden Kühlstruktur-Umfangswand, aufweisen. Die Kühlstruktur kann dann mit der Kühlstruktur-Stirnwand einen axialen Fügespalt oder Fügespaltabschnitt und/oder mit der Kühlstruktur-Umfangswand einen radialen Fügespalt oder Fügespaltabschnitt jeweils mit der Gehäuseumfangswand bilden.

Die Gehäuseumfangswand kann den Motorraum-Abschnitt des Gehäuses bilden und sich über dessen gesamte Länge erstrecken. Zumindest erstreckt sich die Gehäuseumfangswand über den überwiegenden Teil der axialen Länge des Motorraum-Abschnitts. Die Kühlstruktur kann einen Motorraumdeckel bilden, indem sie die Gehäuseumfangswand stirnseitig abschließt. In derartigen Ausführungen endet die Gehäuseumfangswand axial mit dem Motorraum und weist am betreffenden Stirnende eine Motorraum-Öffnung auf, die von der Kühlstruktur verschlossen wird. Das Gehäuse weist in derartigen Ausführungen eine weitere Gehäusestruktur auf, die den Elektronikraum umgibt. Die weitere Gehäusestruktur kann direkt nur mit der Kühlstruktur oder über die Kühlstruktur mit der den Motorraum umgebenden Gehäuseumfangswand gefügt sein. Grundsätzlich kann die weitere Gehäusestruktur aber auch unter Umgehung der Kühlstruktur direkt mit der Gehäuseumfangswand gefügt sein.

In Varianten kann sich die Gehäuseumfangswand aber auch über den Motorraum axial hinaus erstrecken und einen axialen Teilabschnitt des Elektronikraums oder den Elektronikraum auch über seine gesamte axiale Länge umgeben, falls der Elektronikraum wie bevorzugt in axialer Verlängerung zum Motorraum liegt. In diesen Varianten kann die Kühlstruktur über eine stirnseitige Elektronikraum-Öffnung der Gehäuseumfangswand bis in eine vorgesehene axiale Fügeposition in die Gehäuseumfangswand eingeschoben und in der Fügeposition mit der Gehäuseumfangswand gefügt sein.

Das Förderrad kann ein Zahnrad einer Zahnradpumpe oder grundsätzlich auch ein Flügelrad einer Flügelzellenpumpe sein. Bevorzugt ist das Förderrad jedoch in Radialbauweise, d.h. als Radialförderrad ausgeführt. Das Förderrad ist im Pumpenraum um eine Pumpendrehachse drehbar. Bei Drehantrieb eines als Radialförderrad ausgeführten Förderrads wird das zu fördernde Fluid in Bezug auf die Pumpendrehachse axial an einer Saugseite des Förderrads angesaugt, in die radiale Richtung umgelenkt und über den Umfang des Förderrads zum Fluidaustritt gefördert und durch den Fluidaustritt abgefördert.

Der Pumpenraum kann in derartigen Ausführungen einen Umfang aufweisen, der das Förderrad von einer freien Zungenspitze einer Spiralenzunge ausgehend spiralförmig umgibt, wie dies von Kreiselpumpen bekannt ist. Der Fluidaustritt schließt sich in Förderrichtung an den spiralförmigen Umfang an und kann sich insbesondere in eine bezüglich der Pumpendrehachse tangentiale Richtung erstrecken, um das Fluid entsprechend tangential aus dem Pumpenraum zu fördern.

Ist das Förderrad als Radialförderrad mit Förderschaufeln ausgeführt, kann es an einer dem Fluideintritt zugewandten Saugseite eine die Förderschaufeln überdeckende Deckstruktur aufweisen, die mit dem Gehäuse einen saugseitigen Laufspalt bildet. Der Laufspalt dient der Abdichtung und dadurch der Trennung des Pumpenraumbereichs höheren Drucks vom Pumpenraumbereich geringeren Drucks. In vorteilhaften Ausführungen weist die Deckstruktur eine bezüglich der Pumpendrehachse axial erstreckte Umfangswand und/oder eine radial und in die Umfangsrichtung erstreckte Stirnwand auf. Die Deckstruktur kann insbesondere eine axial erstreckte Umfangswand und eine radial erstreckte Stirnwand aufweisen. Die Umfangswand kann axial bis zum Fluideintritt reichen. Die Stirnwand kann sich vorteilhafterweise in Richtung auf den Pumpenraumbereich höheren Drucks an die Umfangswand anschließen.

Bei Radialförderpumpen kleiner Leistung und ebenso bei Betrieb von Radialförderpumpen im unteren Teillastbereich haben Reibungsverluste in der Drehlagerung des Förderrads einen erheblichen Einfluss auf den Wirkungsgrad der Pumpe. Andererseits werden in der Fahrzeugtechnik, einem bevorzugten Anwendungsgebiet der Erfindung, besonders hohe Anforderungen an die Energieeffizienz von Nebenaggregaten, wie beispielsweise einer Kühlmittelpumpe, gestellt. Für die Konstruktion der Pumpe folgt, dass Reibdurchmesser möglichst klein gehalten werden sollten, da die Reibleistung stark mit dem Reibdurchmesser steigt. Daraus folgt, dass möglichst kleine Lager-, Dichtungs- und somit auch Wellendurchmesser vorteilhaft sind. Allerdings muss die Lagerung und Abdichtung den mechanischen Beanspruchungen über die Lebensdauer standhalten. Auf das Förderrad wirkende Axialkräfte und Radialkräfte stellen bei Kreiselpumpen radialer Bauart bekanntermaßen eine wesentliche Belastung für das eine oder die mehreren Lager der Antriebswelle dar.

Es ist somit eine weitere Aufgabe der Erfindung, die mechanische Beanspruchung der Lagerung des Förderrads und/oder der Lagerabdichtung zu reduzieren.

Unter einem zweiten Aspekt der Erfindung, dem Aspekt der Lagerentlastung, betrifft die Erfindung eine Pumpe-Motor-Einheit, die ein Gehäuse mit einem Motorraum, einem Elektronikraum und einem Pumpenraum und ein Förderrad umfasst, das im Pumpenraum um eine Pumpendrehachse drehbar angeordnet ist, um ein Fluid von einem Fluideintritt des Pumpenraums zu einem Fluidaustritt des Pumpenraums zu fördern. Das Förderrad ist in Radialbauweise ausgeführt. Der Pumpenraum bildet einen Sammelraum mit einem Umfang, der sich von einer Zungenspitze einer Spiralenzunge spiralförmig um das Förderrad erstreckt. Die Pumpe-Motor-Einheit umfasst ferner einen elektrischen Antriebsmotor, der im Motorraum angeordnet ist und einen Stator und einen Rotor umfasst, der um eine Motordrehachse drehbar und für den Drehantrieb des Förderrads mit dem Förderrad gekoppelt ist. Im Elektronikraum ist wenigstens eine Elektronikkomponente als weiterer Bestandteil der Pumpen-Motor-Einheit angeordnet. Hinsichtlich der Elektronikkomponente wird auf die bereits zum ersten Aspekt getroffenen Aussagen verwiesen.

Auch unter dem Aspekt der Lagerentlastung umfasst die Pumpe-Motor-Einheit einen Kühlkanal, der wie vorstehend bereits erläutert mit dem Pumpenraumbereich höheren Drucks und dem Pumpenraumbereich geringeren Drucks verbunden ist, um einen Teil des vom Förderrad geförderten Fluids vom Pumpenraumbereich höheren Drucks abzuzweigen und zur Kühlung der Elektronikkomponente und/oder des Antriebsmotors durch den Kühlkanal zu führen. Ein weiterer Bestandteil der Pumpe-Motor-Einheit ist der Rückführkanal, der den Kühlkanal mit dem Pumpenraumbereich geringeren Drucks verbindet und im Pumpenraumbereich geringeren Drucks an einer Rückführöffnung des Gehäuses endet.

Das in Radialbauweise ausgeführte Förderrad umfasst Förderschaufeln und an einer dem Fluideintritt axial zugewandten Saugseite eine die Förderschaufeln überdeckende Deckstruktur, die mit dem Gehäuse einen saugseitigen Laufspalt bildet. Auch diesbezüglich gelten die vorstehend bereits unter dem ersten Aspekt gemachten Aussagen.

Nach der Erfindung unter dem zweiten Aspekt liegt die Rückführöffnung zum Zwecke der Lagerentlastung im Laufspalt der Deckstruktur des Förderrads gegenüber, so dass das durch den Rückführkanal und dessen Rückführöffnung zurückströmende Fluid im Laufspalt eine Axialkraft und/oder eine Radialkraft auf das Förderrad ausübt. Soweit das zurückströmende Fluid auf die Deckstruktur und somit das Förderrad und dessen Drehlagerung eine Axialkraft ausübt, wirkt diese Axialkraft in die Ansaugrichtung, in die das Fluid an der Saugseite des Förderrads, d.h. am Fluideintritt, auf das Förderrad zuströmt. Hierdurch kann zumindest ein Teil der Axialkraft, die aufgrund des Förderbetriebs gegen die Ansaugrichtung wirkt, kompensiert werden. Soweit das vom Kühlkanal zurückströmende Fluid im Laufspalt auf die Deckstruktur und damit auf das Förderrad und dessen Drehlagerung eine Radialkraft ausübt, wirkt diese in axialer Draufsicht auf das Förderrad gesehen vorzugsweise in Richtung auf die Hemisphäre des Pumpenraums, in der der Fluidaustritt liegt. Im Bereich des Fluidaustritts herrscht im Pumpenbetrieb der höhere Druck. Der Fluidaustritt ist dem Pumpenraumbereich höheren Drucks zuzuordnen, so dass in der Draufsicht gesehen vom Fluidaustritt aus radial in Richtung auf das Förderrad Radialkräfte wirken, die durch die erfindungsgemäß mittels des vom Kühlkanal zurückströmenden Fluids erzeugte Radialkraft zumindest teilweise kompensiert werden. Dabei können die Deckstruktur so geformt und die Rückführöffnung so angeordnet und ausgerichtet sein, dass sowohl eine Axialkraft als auch eine Radialkraft zur Kompensation auf die Deckstruktur und damit auf das Förderrad ausgeübt werden.

Was die Deckstruktur anbetrifft, kann diese eine bezüglich der Pumpendrehachse axial erstreckte Umfangswand und/oder eine radial und in Umfangsrichtung erstreckte Stirnwand aufweisen. Weist die Deckstruktur die Umfangswand auf, kann die Rückführöffnung dieser Umfangswand radial gegenüberliegen, so dass das vom Kühlkanal zurückströmende Fluid über die Rückführöffnung zumindest im Wesentlichen in radialer Richtung und/oder primär gegen die Umfangswand der Deckstruktur geführt wird. Weist die Deckstruktur die Stirnwand auf, kann die Rückführöffnung dieser Stirnwand axial gegenüberliegen und das vom Kühlkanal zurückströmende Fluid zumindest im Wesentlichen in axialer Richtung gegen die Stirnwand der Deckstruktur gerichtet werden. Je nach Ausbildung der Deckstruktur sowie Position und Ausrichtung der Rückführöffnung kann entweder eine zumindest überwiegend axiale Kompensationskraft oder eine zumindest überwiegend radiale Kompensationskraft erzeugt werden. Die Verhältnisse können auch so gewählt werden, dass sich die Kompensationskraft aus zumindest im Wesentlichen der Größe nach gleichen Axial- und Radialkraftkomponenten zusammensetzt.

In Weiterbildungen kann das Gehäuse im Bereich des Laufspalts eine Aufweitung aufweisen, die den Laufspalt radial und/oder axial weitet und sich in Umfangsrichtung über einen Bogenwinkel kleiner 360° oder kleiner 180° um die Deckstruktur des Förderrads erstreckt. Der Bogenwinkel kann wenigstens 20° oder wenigstens 30° betragen. Vorteilhafterweise beträgt der Bogenwinkel höchstens 120° oder höchstens 100°. Die Rückführöffnung mündet zweckmäßigerweise in die Aufweitung. Mittels der Aufweitung kann die Richtung der Kompensationskraft weitgehend unabhängig von der Position der Rückführöffnung beeinflusst werden. Darüber hinaus kann der zur Erzeugung der Kompensationskraft erforderliche axiale und/oder radiale Druck auf die Deckstruktur in Umfangsrichtung über eine größere Deckstrukturfläche verteilt werden.

Vorteilhafterweise ist die Aufweitung, falls vorhanden, und/oder die Rückführöffnung in und gegen die Drehrichtung des Förderrads über einen Bogenwinkel von jeweils mehr als 60° oder mehr als 90° von der Zungenspitze der Spiralenzunge entfernt. Soweit das vom Kühlkanal zurückströmende Fluid auf die Deckstruktur des Förderrads eine radiale Kompensationskraft ausübt, ist diese somit in Richtung auf die Hemisphäre des Pumpenraums gerichtet, in der sich der Fluidaustritt befindet.

Die beiden Aspekte, nämlich die vereinfachte Konstruktion der integrierten Kühlung und die Lagerentlastung mittels des vom Kühlkanal zurückströmenden Fluids, können voneinander separat oder vorteilhafterweise in Kombination verwirklicht sein. Die zu jeweils dem einen Aspekt offenbarten Merkmale können somit vorteilhaft auch unter dem jeweils anderen Aspekt verwirklicht werden.

Auch in den nachstehend formulierten Aspekten werden Merkmale der Erfindung beschrieben. Die Aspekte sind in der Art von Ansprüchen formuliert und können diese ersetzen. In den Aspekten offenbarte Merkmale können die Ansprüche ferner ergänzen und/oder relativieren, Alternativen zu einzelnen Merkmalen aufzeigen und/oder Anspruchsmerkmale erweitern. In Klammern gesetzte Bezugszeichen beziehen sich auf nachfolgend in Figuren illustrierte Ausführungsbeispiele der Erfindung. Sie schränken die in den Aspekten beschriebenen Merkmale nicht unter dem Wortsinn als solchen ein, zeigen andererseits jedoch bevorzugte Möglichkeiten der Verwirklichung des jeweiligen Merkmals auf.

Aspekt 1. Pumpe-Motor-Einheit, die Folgendes umfasst:
1.1 ein Gehäuse mit einem Motorraum, einem Elektronikraum und einem Pumpenraum mit einem Fluideintritt (21) und einem Fluidaustritt (22),
1.2 ein Förderrad (1), das im Pumpenraum drehbar angeordnet ist, um ein Fluid vom Fluideintritt (21) zum Fluidaustritt (22) zu fördern,
1.3 einen im Motorraum angeordneten elektrischen Antriebsmotor (7, 8), der einen Stator (7) und einen drehbaren Rotor (8) für einen Drehantrieb des Förderrads (1) umfasst, und
1.4 eine Elektronikkomponente (41), die im Elektronikraum angeordnet ist,
   wobei das Gehäuse Folgendes umfasst:
   1.5 eine Gehäuseumfangswand (11), die sich um eine Längsachse (R) des Gehäuses erstreckt und den Antriebsmotor (7, 8) umgibt,
   1.6 eine Kühlstruktur (30), die axial zwischen dem Motorraum und dem Elektronikraum angeordnet ist, und
   1.7 einen Kühlkanal (33; 37; 38; 19) mit einem Kühlkanaleinlass (34; 19a), der mit einem Pumpenraumbereich höheren Drucks verbunden ist, und einem Kühlkanalauslass (35; 19b), der mit einem Pumpenraumbereich geringeren Drucks verbunden ist, um einen Teil des Fluids zur Kühlung der Elektronikkomponente (41) vom Pumpenraumbereich höheren Drucks über den Kühlkanal (33; 37; 38; 19) zum Pumpenraumbereich geringeren Drucks zu leiten.
Aspekt 2. Pumpe-Motor-Einheit nach dem vorhergehenden Aspekt, wobei die Kühlstruktur (30) mit der Gehäuseumfangswand (11) gefügt ist, mit der die Kühlstruktur (30) um die Längsachse (R) einen Fügespalt (A; B; C) bildet, und wobei der Kühlkanal (33; 37; 38; 19) im Bereich des Fügespalts (A; B; C) ringförmig um die Längsachse (R) erstreckt und abgedichtet ist.
Aspekt 3. Pumpe-Motor-Einheit nach dem vorhergehenden Aspekt, wobei der Kühlkanaleinlass (34; 19a) und der Kühlkanalauslass (35; 19b) radial außerhalb eines den Antriebsmotor (7, 8) einhüllenden Hüllkreiszylinders liegen.
Aspekt 4. Pumpe-Motor-Einheit nach einem der vorhergehenden Aspekte, wobei sich der Kühlkanal (33; 37; 38; 19) radial außerhalb eines den Antriebsmotor (7, 8) einhüllenden Hüllkreiszylinders erstreckt.
Aspekt 5. Pumpe-Motor-Einheit nach einem der vorhergehenden Aspekte, die einen Zuführkanal (14, 24) umfasst, der den Kühlkanal (33; 37; 38; 19) mit dem Pumpenraumbereich höheren Drucks verbindet und in den Kühlkanaleinlass (34: 19a) mündet, und einen Rückführkanal (15, 25), der den Kühlkanal (33; 37; 38; 19) mit dem Pumpenraumbereich geringeren Drucks verbindet und sich an den Kühlkanalauslass (35; 19b) anschließt, wobei sich der Zuführkanal (14, 24) und der Rückführkanal (15, 25) jeweils bis zum Kühlkanal (33; 37; 38; 19) peripher vom Antriebsmotor (7, 8) durch die Gehäuseumfangswand (11) erstrecken.
Aspekt 6. Pumpe-Motor-Einheit nach einem der vorhergehenden Aspekte in Kombination mit Aspekt 2, wobei sich der Kühlkanal (33; 37; 38; 19) vom Kühlkanaleinlass (34; 19a) bis zum Kühlkanalauslass (35; 19b) im Fügespalt (A; B; C) über einen Winkel von wenigstens 270° um die Längsachse (R) erstreckt.
Aspekt 7. Pumpe-Motor-Einheit nach einem der vorhergehenden Aspekte in Kombination mit Aspekt 2, wobei sich der Kühlkanal (33; 37; 38; 19) vom Kühlkanaleinlass (34; 19a) bis zum Kühlkanalauslass (35; 19b) im Fügespalt (A; B; C) über einen Winkel von weniger als 360° um die Längsachse (R) erstreckt.
Aspekt 8. Pumpe-Motor-Einheit nach einem der vorhergehenden Aspekte, wobei der Kühlkanal (33; 37; 38; 19) ringförmig ist und sich vom Kühlkanaleinlass (34; 19a) aus um die Längsachse (R) in nur eine Umfangsrichtung bis zum Kühlkanalauslass (35; 19b) erstreckt.
Aspekt 9. Pumpe-Motor-Einheit nach einem der vorhergehenden Aspekte, wobei die Kühlstruktur (30) an einer Stirnseite eine axiale Vertiefung und/oder an einem Umfang eine radiale Vertiefung aufweist, die wenigstens einen Teil des Kühlkanals (33; 37; 38) bildet.
Aspekt 10. Pumpe-Motor-Einheit nach einem der vorhergehenden Aspekte, wobei die Gehäuseumfangswand (11) an einer Stirnseite eine axiale Vertiefung und/oder an einem Umfang eine radiale Vertiefung aufweist, die wenigstens einen Teil des Kühlkanals (19) bildet.
Aspekt 11. Pumpe-Motor-Einheit nach einem der vorhergehenden Aspekte in Kombination mit Aspekt 2, wobei
   - die Gehäuseumfangswand (11) eine Gehäuseumfangswand-Stirnfläche aufweist und die Gehäuseumfangswand-Stirnfläche mit der Kühlstruktur (30) im Fügespalt (A; B) radial überlappt,
   - sich der Kühlkanal (33; 38) im Fügespalt (A; B) axial zwischen der Gehäuseumfangswand (11) und der Kühlstruktur (30) um die Längsachse (R) erstreckt,
   - ein äußeres Dichtelement (17) den Kühlkanal (33; 38) radial außen abdichtet, und
   - ein inneres Dichtelement (18) den Kühlkanal (33; 38) radial innen abdichtet.
Aspekt 12. Pumpe-Motor-Einheit nach einem der vorhergehenden Aspekte in Kombination mit Aspekt 2, wobei
   - die Gehäuseumfangswand (11) mit der Kühlstruktur (30) im Fügespalt (B; C) axial überlappt,
   - sich der Kühlkanal (37; 38) im Fügespalt (B; C) radial zwischen der Gehäuseumfangswand (11) und der Kühlstruktur (30) um die Längsachse (R) erstreckt,
   - ein linkes Dichtelement (17) den Kühlkanal (37; 38) an einer axial linken Seite abdichtet, und
   - ein rechtes Dichtelement (18) den Kühlkanal (37; 38) an einer axial rechten Seite abdichtet.
Aspekt 13. Pumpe-Motor-Einheit nach einem der zwei unmittelbar vorhergehenden Aspekte, wobei
   - die Dichtelemente (17, 18) separate Dichtringe sind,
   - eines der Dichtelemente (17, 18) in einer ersten Aufnahme (16) und das andere der Dichtelemente in einer zweiten Aufnahme (36) positioniert ist, und
   - die erste Aufnahme (16) an der Gehäuseumfangswand (11) oder an der Kühlstruktur (30) und
   - die zweite Aufnahme (36) an der Gehäuseumfangswand (11) oder an der Kühlstruktur (30) geformt sind.
Aspekt 14. Pumpe-Motor-Einheit nach Aspekt 11 oder Aspekt 12, wobei
   - ein einziger Dichtring die Dichtelemente bildet,
   - der Dichtring in einer Aufnahme positioniert ist, und
   - die Aufnahme an der Gehäuseumfangswand (11) oder an der Kühlstruktur (30) geformt ist.
Aspekt 15. Pumpe-Motor-Einheit nach einem der vorhergehenden Aspekte in Kombination mit Aspekt 2, wobei der Fügespalt (A) einen radialen Fügespaltabschnitt und einen axialen Fügespaltabschnitt aufweist und eine Vertiefung in einer den radialen Fügespaltabschnitt begrenzenden Umfangswand oder eine Vertiefung in einer den axialen Fügespaltabschnitt begrenzenden Stirnwand der Kühlstruktur (30) oder der Gehäuseumfangswand (11) den Kühlkanal (33; 38; 19) bildet.
Aspekt 16. Pumpe-Motor-Einheit nach einem der vorhergehenden Aspekte in Kombination mit Aspekt 2, wobei der Fügespalt (A) einen radialen Fügespaltabschnitt und einen axialen Fügespaltabschnitt aufweist und sich der Kühlkanal (38) über Eck in beide Fügespaltabschnitte erstreckt.
Aspekt 17. Pumpe-Motor-Einheit nach einem der vorhergehenden Aspekte, wobei die Kühlstruktur (30) eine axiale Abragung (32; 32a) aufweist, die die Gehäuseumfangswand (11) umgibt oder von der Gehäuseumfangswand (11) umgeben wird, wobei die Gehäuseumfangswand (11) und die Kühlstruktur (30) einen um die axiale Abragung (32; 32a) und/oder um die Gehäuseumfangswand (11) ringförmig umlaufenden radialen Fügespalt (A; C) radial begrenzen, und wobei sich der Kühlkanal (37; 38) vorzugsweise im radialen Fügespalt (A; C) erstreckt.
Aspekt 18. Pumpe-Motor-Einheit nach dem vorhergehenden Aspekt, wobei ein ringförmiges Dichtelement (18), vorzugsweise ein als Radialdichtung wirkender Dichtring, den radialen Fügespalt (A; C) abdichtet, vorzugsweise zum Motorraum abdichtet.
Aspekt 19. Pumpe-Motor-Einheit nach dem vorhergehenden Aspekt, wobei ein ringförmiges weiteres Dichtelement (17), vorzugsweise ein als Radialdichtung wirkender Dichtring, den radialen Fügespalt (C) abdichtet, vorzugsweise zum Elektronikraum abdichtet.
Aspekt 20. Pumpe-Motor-Einheit nach einem der Aspekte 1 bis 18, wobei die Gehäuseumfangswand (11) und die Kühlstruktur (30) einander im Fügespalt (A) in Bezug auf die Längsachse (R) in axialer Richtung und in radialer Richtung überlappen und sich der Kühlkanal (38) axial und radial in den Fügespalt (A) erstreckt.
Aspekt 21. Pumpe-Motor-Einheit nach einem der vorhergehenden Aspekte, wobei die Gehäuseumfangswand (11) mit einer Gehäuseumfangswand-Stirnfläche und die Kühlstruktur (30) mit einer Kühlstruktur-Stirnfläche einen ringförmigen axialen Fügespalt (A; B) bilden und ein ringförmiges Dichtelement (17), vorzugsweise ein als Axialdichtung wirkender Dichtring, den axialen Fügespalt (A; B) um die Längsachse (R) radial außen abdichtet.
Aspekt 22. Pumpe-Motor-Einheit nach Aspekt 19 oder einer Kombination der Aspekte 18 und 21, wobei sich der Kühlkanal (33; 37; 38; 19) zwischen den Dichtelementen (17, 18) um die Längsachse (R) erstreckt und mittels der Dichtelemente (17, 18) abgedichtet wird.
Aspekt 23. Pumpe-Motor-Einheit nach einem der vorhergehenden Aspekte, wobei das Förderrad (1) ein um eine Pumpendrehachse (R) drehbares Radialförderrad ist und das Gehäuse einen Umfang (28) aufweist, der das Förderrad (1) spiralförmig umgibt.
Aspekt 24. Pumpe-Motor-Einheit nach einem der vorhergehenden Aspekte, wobei das Förderrad (1) ein um eine Pumpendrehachse (R) drehbares Radialförderrad ist und Schaufeln (2) sowie an einer dem Fluideintritt zugewandten Saugseite eine Deckstruktur (3) aufweist, die mit dem Gehäuse einen saugseitigen Laufspalt bildet.
Aspekt 25. Pumpe-Motor-Einheit nach dem vorhergehenden Aspekt, wobei die Deckstruktur (3) eine bezüglich der Pumpendrehachse (R) axial erstreckte Umfangswand (4) und/oder eine radial und in Umfangsrichtung erstreckte Stirnwand (5) aufweist.
Aspekt 26. Pumpe-Motor-Einheit nach einem der vorhergehenden Aspekte, die einen Rückführkanal (15, 25) umfasst, der den Kühlkanal (33; 37; 38; 19) mit dem Pumpenraumbereich geringeren Drucks verbindet und im Pumpenraumbereich geringeren Drucks an einer Rückführöffnung (26) endet, derart, dass das durch die Rückführöffnung (26) zurückgeleitete Fluid auf das Förderrad (1) eine axiale Gegenkraft zu einer durch die Förderung des Fluids auf das Förderrad (1) wirkenden Axialkraft und/oder eine radiale Gegenkraft zu einer durch die Förderung des Fluids auf das Förderrad (1) wirkenden Radialkraft ausübt.
Aspekt 27. Pumpe-Motor-Einheit nach einem der vorhergehenden Aspekte, die einen Rückführkanal (15, 25) umfasst, der den Kühlkanal (33; 37; 38; 19) mit dem Pumpenraumbereich geringeren Drucks verbindet und im Pumpenraumbereich geringeren Drucks an einer Rückführöffnung (26) des Gehäuses endet, die in einem Laufspalt gebildet ist, den das Förderrad (1) und das Gehäuse radial und/oder axial begrenzen.
Aspekt 28. Pumpe-Motor-Einheit nach einem der vorhergehenden Aspekte, die einen Rückführkanal (15, 25) umfasst, der den Kühlkanal (33; 37; 38; 19) mit dem Pumpenraumbereich geringeren Drucks verbindet und im Pumpenraumbereich geringeren Drucks an einer Rückführöffnung (26) des Gehäuses endet, die in einem um die Längsachse (R) erstreckten Laufspalt gebildet ist, den das Förderrad (1) und das Gehäuse begrenzen, wobei das zurückgeführte Fluid im Laufspalt eine Axialkraft auf eine Saugseite des Förderrads (1), vorzugsweise auf eine Deckstruktur (3) des Förderrads (1), ausübt.
Aspekt 29. Pumpe-Motor-Einheit nach einem der vorhergehenden Aspekte, die einen Rückführkanal (15, 25) umfasst, der den Kühlkanal (33; 37; 38; 19) mit dem Pumpenraumbereich geringeren Drucks verbindet und im Pumpenraumbereich geringeren Drucks an einer Rückführöffnung (26) des Gehäuses endet, die in einem um die Längsachse (R) erstreckten Laufspalt gebildet ist, den das Förderrad (1) und das Gehäuse begrenzen, wobei die Rückführöffnung (26) über den Laufspalt einer Saugseite des Förderrads (1), vorzugsweise einer Deckstruktur (3) des Förderrads (1) gegenüberliegt, so dass das in den Laufspalt zurückgeführte Fluid im Laufspalt eine Axialkraft ausübt, deren Richtung mit der Strömungsrichtung des Fluids am Fluideintritt (21) übereinstimmt.
Aspekt 30. Pumpe-Motor-Einheit nach einem der vier unmittelbar vorhergehenden Aspekte, wobei das Förderrad (1) so geformt und/oder die Rückführöffnung (26) im Laufspalt so gebildet ist oder sind, dass das durch die Rückführöffnung (26) zurückströmende Fluid auf das Förderrad (1) eine Kraft mit zumindest überwiegender Axialkomponente ausübt.
Aspekt 31. Pumpe-Motor-Einheit nach einem der Aspekte 26 bis 29, wobei das Förderrad (1) so geformt und/oder die Rückführöffnung (26) im Laufspalt so gebildet ist oder sind, dass das durch die Rückführöffnung (26) zurückströmende Fluid auf das Förderrad (1) eine Kraft mit zumindest überwiegender Radialkomponente ausübt.
Aspekt 32. Pumpe-Motor-Einheit nach einem der vorhergehenden Aspekte, die einen Rückführkanal (15, 25) umfasst, der den Kühlkanal (33; 37; 38; 19) mit dem Pumpenraumbereich geringeren Drucks verbindet und im Pumpenraumbereich geringeren Drucks an einer Rückführöffnung (26) des Gehäuses endet, die in einem Laufspalt gebildet ist, den das Förderrad (1) und das Gehäuse begrenzen, wobei das Gehäuse im Bereich des Laufspalts eine Aufweitung (27) aufweist, die sich in Umfangsrichtung über einen Bogenwinkel (β) von wenigstens 20° und höchstens 120° um das Förderrad (1) erstreckt und den Laufspalt radial und/oder axial weitet.
Aspekt 33. Pumpe-Motor-Einheit nach einem der vorhergehenden Aspekte in Kombination mit einem der Aspekte 24 und 25, die einen Verbindungskanal (25a) umfasst, der vom Pumpenraumbereich höheren Drucks durch das Gehäuse zum Laufspalt führt und an einer Kanalöffnung (26a) mündet, die der Deckstruktur (3) des Förderrads (1) über den Laufspalt axial und/oder radial zugewandt gegenüberliegt, so dass Fluid aus dem Pumpenraumbereich höheren Drucks unmittelbar in den Laufspalt geleitet wird, um auf das Förderrad (1) im Laufspalt eine Axialkraft und/oder eine Radialkraft auszuüben.
Aspekt 34. Pumpe-Motor-Einheit nach dem vorhergehenden Aspekt, wobei das Gehäuse im Bereich des Laufspalts eine Aufweitung (27) aufweist, die sich in Umfangsrichtung über einen Bogenwinkel (β) von wenigstens 20° und höchstens 120° um das Förderrad (1) erstreckt und den Laufspalt radial und/oder axial weitet, und wobei der Verbindungskanal (25a) in die Aufweitung (27) mündet.
Aspekt 35. Pumpe-Motor-Einheit nach einem der Aspekte 26 bis 34, wobei
   - das Förderrad (1) ein Radialförderrad ist,
   - das Gehäuse einen Sammelraum mit einem Umfang (28) aufweist, der sich von einer freien Zungenspitze einer Spiralenzunge (29) spiralförmig um das Förderrad (1) erstreckt, und
   - die Aufweitung (27), falls vorhanden, und/oder die Rückführöffnung (26) in und gegen die Drehrichtung des Förderrads (1) über einen Bogenwinkel (α) von mehr als 60° oder mehr als 90° von der Zungenspitze entfernt ist oder sind.
Aspekt 36. Pumpe-Motor-Einheit nach einem der Aspekte 26 bis 35 in Kombination mit einem der Aspekte 24 und 25, wobei die Aufweitung (27), falls vorhanden, und/oder die Rückführöffnung (26) im Laufspalt der Umfangswand (4) der Deckstruktur (3) radial und/oder der Stirnwand (5) der Deckstruktur (3) axial zugewandt gegenüberliegt.
Aspekt 37. Pumpe-Motor-Einheit nach einem der vorhergehenden Aspekte, wobei
   - das Förderrad (1) ein Radialförderrad ist,
   - das Gehäuse einen Sammelraum mit einem Umfang (28) aufweist, der sich von einer freien Zungenspitze einer Spiralenzunge (29) spiralförmig um das Förderrad (1) erstreckt,
   - der Kühlkanal (33; 37; 38; 19) über einen Zuführkanal (14, 24) mit dem Pumpenraumbereich höheren Drucks verbunden ist, und
   - der Zuführkanal (14, 24) im Pumpenraumbereich höheren Drucks an einer Ausleitöffnung (23) am spiralförmigen Umfang (28) des Sammelraums mündet.
Aspekt 38. Pumpe-Motor-Einheit, die Folgendes umfasst:
   38.1 ein Gehäuse mit einem Pumpenraum mit einem Fluideintritt (21) und einem Fluidaustritt (22), einem Motorraum und einem Elektronikraum,
   38.2 ein Förderrad (1) in Radialbauweise, das im Pumpenraum um eine Pumpendrehachse (R) drehbar angeordnet ist, um ein Fluid vom Fluideintritt (21) zum Fluidaustritt (22) zu fördern,
   38.3 einen vom Pumpenraum gebildeten Sammelraum mit einem Umfang (28), der sich von einer Zungenspitze einer Spiralenzunge (29) spiralförmig um das Förderrad (1) erstreckt,
   38.4 einen im Motorraum angeordneten elektrischen Antriebsmotor (7, 8), der einen Stator (7) und einen Rotor (8) für einen Drehantrieb des Radialförderrads (1) umfasst,
   38.5 eine Elektronikkomponente (41), die im Elektronikraum angeordnet ist, und
   38.6 einen Kühlkanal (33; 37; 38; 19), der mit einem Pumpenraumbereich höheren Drucks und einem Pumpenraumbereich geringeren Drucks verbunden ist, um einen Teil des vom Förderrad (1) geförderten Fluids vom Pumpenraumbereich höheren Drucks abzuzweigen und zur Kühlung der Elektronikkomponente (41) und/oder des Antriebsmotors (7, 8) durch den Kühlkanal (33; 37; 38; 19) zu führen, und
   38.7 einen Rückführkanal (15, 25), der den Kühlkanal (33; 37; 38; 19) mit dem Pumpenraumbereich geringeren Drucks verbindet und im Pumpenraumbereich geringeren Drucks an einer Rückführöffnung (26) des Gehäuses endet,
   38.8 wobei das Förderrad (1) Förderschaufeln und an einer dem Fluideintritt (21) axial zugewandten Saugseite eine Deckstruktur (3) aufweist, die mit dem Gehäuse einen saugseitigen Laufspalt bildet, und
   38.9 die Rückführöffnung (26) im Laufspalt der Deckstruktur (3) gegenüberliegt, so dass das durch den Rückführkanal (15, 25) zurückströmende Fluid im Laufspalt eine Axialkraft und/oder eine Radialkraft auf das Radialförderrad (1) ausübt.
Aspekt 39. Pumpe-Motor-Einheit nach dem vorhergehenden Aspekt, wobei das Gehäuse im Bereich des Laufspalts eine Aufweitung (27) aufweist, die sich in Umfangsrichtung über einen Bogenwinkel (β) von wenigstens 20° und höchstens 120° um das Förderrad (1) erstreckt und den Laufspalt radial und/oder axial weitet.
Aspekt 40. Pumpe-Motor-Einheit nach einem der zwei unmittelbar vorhergehenden Aspekte, wobei die Aufweitung (27), falls vorhanden, und/oder die Rückführöffnung (26) in und gegen die Drehrichtung des Förderrads (1) über einen Bogenwinkel (α) von mehr als 60° oder mehr als 90° von der Zungenspitze entfernt ist oder sind.
Aspekt 41. Pumpe-Motor-Einheit nach einem der drei unmittelbar vorhergehenden Aspekte, wobei der Zuführkanal (14, 24) im Pumpenraumbereich höheren Drucks an einer Ausleitöffnung (23) am spiralförmigen Umfang (28) des Sammelraums mündet.
Aspekt 42. Pumpe-Motor-Einheit nach einem der vier unmittelbar vorhergehenden Aspekte, wobei das Förderrad (1) so geformt und/oder die Rückführöffnung (26) so angeordnet ist, dass das durch die Rückführöffnung (26) zurückgeleitete Fluid auf das Förderrad (1) eine Kraft mit zumindest überwiegender Radialkomponente ausübt.
Aspekt 43. Pumpe-Motor-Einheit nach einem der fünf unmittelbar vorhergehenden Aspekte, wobei das Förderrad (1) so geformt und/oder die Rückführöffnung (26) so angeordnet ist, dass das durch die Rückführöffnung (26) zurückgeleitete Fluid auf das Förderrad (1) eine Kraft mit zumindest überwiegender Axialkomponente ausübt.
Aspekt 44. Pumpe-Motor-Einheit nach einem der Aspekte 38 bis 43 in Kombination mit einem der Aspekte 1 bis 37.
Aspekt 45. Pumpe-Motor-Einheit nach einem der Aspekte 38 bis 44, wobei die Deckstruktur (3) eine bezüglich der Pumpendrehachse (R) axial erstreckte Umfangswand (4) und/oder eine radial und in Umfangsrichtung erstreckte Stirnwand (5) aufweist.
Aspekt 46. Pumpe-Motor-Einheit nach dem vorhergehenden Aspekt, wobei die Aufweitung (27), falls vorhanden, und/oder die Rückführöffnung (26) im Laufspalt der Umfangswand (4) der Deckstruktur (3) radial und/oder der Stirnwand (5) der Deckstruktur (3) axial zugewandt gegenüberliegt.
Aspekt 47. Pumpe-Motor-Einheit nach einem der Aspekte 38 bis 46, wobei das Gehäuse eine Gehäuseumfangswand (11), die sich um eine Längsachse (R) des Gehäuses erstreckt und den Antriebsmotor (7, 8) umgibt, und zwischen Motorraum und Elektronikraum eine mit der Gehäuseumfangswand gefügte Kühlstruktur (30) zur Bildung des Kühlkanals (33; 37; 38; 19) aufweist, wobei sich der Kühlkanal (33; 37; 38; 19) vorzugsweise in einem Fügespalt (A; B; C) erstreckt, den die Gehäuseumfangswand (11) und die Kühlstruktur (30) miteinander bilden.
Aspekt 48. Pumpe-Motor-Einheit nach dem vorhergehenden Aspekt oder einem der Aspekte 1 bis 37, wobei die Gehäuseumfangswand (11) nach Aspekt 1 eine stirnseitige Motorraum-Öffnung (13) aufweist, und die Kühlstruktur (30) einen Motorraumdeckel (30) bildet, der die Motorraum-Öffnung (13) verschließt und den Elektronikraum vom Motorraum trennt, wobei die Gehäuseumfangswand (11) axial vorzugsweise vor dem Elektronikraum endet.
Aspekt 49. Pumpe-Motor-Einheit nach dem vorhergehenden Aspekt, wobei das Gehäuse einen Elektronikraum-Abschnitt (40) umfasst, der den Elektronikraum begrenzt und nur direkt mit der Kühlstruktur (30) oder über die Kühlstruktur (30) mit der Gehäuseumfangswand (11) gefügt ist.
Aspekt 50. Pumpe-Motor-Einheit nach Aspekt 47 oder einem der Aspekte 1 bis 37, wobei die Gehäuseumfangswand (11) den Motorraum und die Kühlstruktur (30) umgibt und in beide axiale Richtungen über die Kühlstruktur (30) hinausragt, und wobei sich ein Innenumfang der Gehäuseumfangswand (11) und ein Außenumfang der Kühlstruktur (30) unter Bildung eines radialen Fügespalts (C) gegenüberliegen, in dem der Kühlkanal (38) gebildet ist.
Aspekt 51. Pumpe-Motor-Einheit nach dem vorhergehenden Aspekt, wobei die Gehäuseumfangswand (11) auch den Elektronikraum umgibt, vorzugsweise über dessen gesamte Länge.
Aspekt 52. Pumpe-Motor-Einheit nach einem der Aspekte 1 bis 37 und 47 bis 51, wobei die Gehäuseumfangswand (11) bis zu einer stirnseitigen Öffnung (13) einen freien Innenquerschnitt aufweist, der so groß ist, dass der Stator (4) und der Rotor (5) durch die stirnseitige Öffnung (13) axial in den Motorraum bis in eine Montageposition einführbar oder aus dem Motorraum entnehmbar sind.
Aspekt 53. Pumpe-Motor-Einheit nach einem der vorhergehenden Aspekte, wobei die Kühlstruktur (30) den Elektronikraum staubdicht und/oder flüssigkeitsdicht vom Motorraum trennt.
Aspekt 54. Pumpe-Motor-Einheit nach einem der vorhergehenden Aspekte, wobei das Gehäuse einen Pumpenraum-Abschnitt (20) umfasst, der das Förderrad (1) umgibt.
Aspekt 55. Pumpe-Motor-Einheit nach dem vorhergehenden Aspekt, wobei der Pumpenraum-Abschnitt (20) einen Sammelraum mit einem Umfang (28) bildet, der sich von einer Zungenspitze einer Spiralenzunge (29) ausgehend spiralförmig um das Förderrad (1) erstreckt.
Aspekt 56. Pumpe-Motor-Einheit nach einem der zwei unmittelbar vorhergehenden Aspekte, wobei der Pumpenraum-Abschnitt (20) separat von der Gehäuseumfangswand (11) geformt und mit der Gehäuseumfangswand (11) gefügt ist.
Aspekt 57. Pumpe-Motor-Einheit nach einem der vorhergehenden Aspekte in Kombination mit einem der Aspekte 26 und 38, wobei der Rückführkanal (15, 25) einen stromabwärtigen Kanalabschnitt (25) aufweist, der das Förderrad (1) übergreift, um das vom Kühlkanal (33; 37; 38; 19) zurückströmende Fluid in den Laufspalt an der Saugseite des Förderrads (1) zu leiten.
Aspekt 58. Pumpe-Motor-Einheit nach einer Kombination der zwei unmittelbar vorhergehenden Aspekte, wobei der Rückführkanal (15, 25) einen in der Gehäuseumfangswand (11) erstreckten stromaufwärtigen Kanalabschnitt (15) aufweist und der übergreifende Kanalabschnitt (25) im Pumpenraum-Abschnitt (20) geformt ist, so dass der übergreifende Kanalabschnitt (25) unmittelbar durch das Fügen des Pumpenraum-Abschnitts (20) und der Gehäuseumfangswand (11) an den stromaufwärtigen Kanalabschnitt (15) der Gehäuseumfangswand (11) angeschlossen wird.
Aspekt 59. Pumpe-Motor-Einheit nach einem der vorhergehenden Aspekte, wobei das Förderrad (1) und der Antriebsmotor (7, 8) um die gleiche Drehachse (R) drehbar angeordnet sind.
Aspekt 60. Pumpe-Motor-Einheit nach einem der vorhergehenden Aspekte, die eine Antriebswelle (6) umfasst, die drehunbeweglich mit dem Förderrad (1) und dem Rotor (8) des Antriebsmotors (7, 8) verbunden ist.
Aspekt 61. Pumpe-Motor-Einheit nach einem der vorhergehenden Aspekte, wobei die Längsachse (R) nach einem der Aspekte 1 bis 37 auch die Pumpendrehachse und/oder die Motordrehachse bildet.
Aspekt 62. Pumpe-Motor-Einheit nach einem der vorhergehenden Aspekte, wobei die Pumpe-Motor-Einheit eine Kühlmittelpumpe zur Förderung eines Kühlfluids, vorzugsweise einer wasserbasierten Kühlflüssigkeit, in einem Kraftfahrzeug ist.

Nachfolgend werden Ausführungsbeispiele der Erfindung anhand von Figuren erläutert. An den Ausführungsbeispielen offenbar werdende Merkmale bilden jeweils einzeln und in jeder Merkmalskombination die Gegenstände der Ansprüche und der vorstehenden Aspekte sowie die vorstehend beschriebenen weiteren Ausgestaltungen vorteilhaft weiter. Es zeigen:
- Figur 1: eine erfindungsgemäße Pumpe-Motor-Einheit eines ersten Ausführungsbeispiels in einer isometrischen Sicht auf ein Gehäuse der Einheit,
- Figur 2: die Pumpe-Motor-Einheit in einer axialen Sicht auf einen Fluideintritt,
- Figur 3: den Längsschnitt A-A der Figur 2,
- Figur 4: den Längsschnitt B-B der Figur 2,
- Figur 5: einen Motorraum-Abschnitt des Gehäuses des ersten Ausführungsbeispiels in einer isometrischen Sicht auf eine stirnseitige Öffnung,
- Figur 6: eine Kühlstruktur des ersten Ausführungsbeispiels in einer isometrischen Sicht,
- Figur 7: die Kühlstruktur des ersten Ausführungsbeispiels in einem Längsschnitt,
- Figur 8: die Pumpe-Motor-Einheit des ersten Ausführungsbeispiels in einer Seitenansicht,
- Figur 9: den Querschnitt C-C der Figur 8,
- Figur 10: eine Pumpe-Motor-Einheit eines zweiten Ausführungsbeispiels in einer Seitenansicht,
- Figur 11: den Querschnitt D-D der Figur 10,
- Figur 12: eine Pumpe-Motor-Einheit eines dritten Ausführungsbeispiels in einem Längsschnitt,
- Figur 13: eine Kühlstruktur des dritten Ausführungsbeispiels in einer isometrischen Sicht,
- Figur 14: eine Kühlstruktur eines vierten Ausführungsbeispiels in einer isometrischen Sicht,
- Figur 15: die Kühlstruktur des vierten Ausführungsbeispiels in einem Längsschnitt,
- Figur 16: eine Pumpe-Motor-Einheit eines fünften Ausführungsbeispiels in einem Längsschnitt,
- Figur 17: eine Kühlstruktur des fünften Ausführungsbeispiels in einem Längsschnitt,
- Figur 18: eine Pumpe-Motor-Einheit eines sechsten Ausführungsbeispiels in einer Längsschnittisometrie,
- Figur 19: eine Pumpe-Motor-Einheit eines siebten Ausführungsbeispiels in einem Längsschnitt,
- Figur 20: einen Pumpenraum-Abschnitt des Gehäuses des siebten Ausführungsbeispiels in einer axialen Sicht auf eine Innenseite,
- Figur 21: eine Pumpe-Motor-Einheit eines achten Ausführungsbeispiels in einem Querschnitt durch einen Pumpenraum,
- Figur 22: die Pumpe-Motor-Einheit des achten Ausführungsbeispiels in einem Längsschnitt,
- Figur 23: den Pumpenraum-Abschnitt des Gehäuses des achten Ausführungsbeispiels in einer isometrischen Sicht, und
- Figur 24: die Pumpe-Motor-Einheit des achten Ausführungsbeispiels in einem weiteren Längsschnitt.

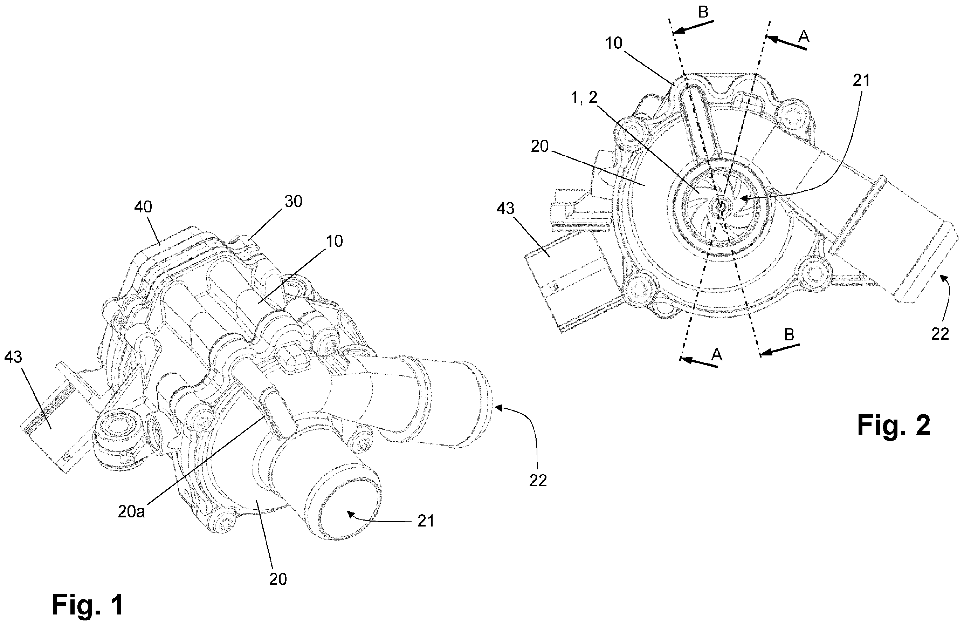

Die Figuren 1 bis 9 zeigen eine Pumpe-Motor-Einheit eines ersten Ausführungsbeispiels. Ein Gehäuse der Pumpe-Motor-Einheit ist in Figur 1 in einer Isometrie dargestellt. Im Gehäuse sind ein im Betrieb der Einheit von einem Fluid durchströmter Pumpenraum, ein Motorraum und ein Elektronikraum gebildet. Das Gehäuse unterteilt sich dementsprechend in mehrere funktionale Gehäuseabschnitte, wie etwa einen Motorraum-Abschnitt 10, einen Pumpenraum-Abschnitt 20 und einen Elektronikraum-Abschnitt 40. Der Pumpenraum-Abschnitt 20 begrenzt den Pumpenraum. Der Motorraum-Abschnitt 10 umgibt den Motorraum, und der Elektronikraum-Abschnitt 40 begrenzt den Elektronikraum. Der Pumpenraum-Abschnitt 20 weist einen Fluideintritt 21 und einen Fluidaustritt 22 für das Fluid auf. Im Elektronikraum sind elektronische Komponenten einer Steuerung für einen Antriebsmotor der Einheit aufgenommen, die über einen Anschluss 43 mit elektrischer Energie und/oder Signalen versorgt werden.

Der Pumpenraum, der Motorraum und der Elektronikraum sind entlang einer Gehäuselängsachse hintereinander bzw. nebeneinander angeordnet, wobei sich der Motorraum axial zwischen dem Pumpenraum und dem Elektronikraum befindet. Entsprechend sind auch die Gehäuseabschnitte 10, 20 und 40 entlang der Gehäuselängsachse nebeneinander und der Pumpenraum-Abschnitt 20 zu einer Stirnseite und der Elektronikraum-Abschnitt 40 zur anderen Stirnseite des Motorraum-Abschnitts 10 angeordnet.

Zusätzlich zu den Gehäuseabschnitten 10, 20 und 40 umfasst das Gehäuse eine Kühlstruktur 30, die axial zwischen dem Motorraum und dem Elektronikraum angeordnet ist. Die Kühlstruktur 30 dient der Kühlung einer oder mehrerer Elektronikkomponenten, die im Elektronikraum aufgenommen ist oder sind. Zur Kühlung wird ein Teilstrom des von der Pumpe-Motor-Einheit geförderten Fluids im Pumpenraum abgezweigt und in einem internen Kühlkreislauf über die Kühlstruktur 30 wieder in den Pumpenraum zurückgeführt. Der interne Kühlkreislauf zur Kühlung der einen oder mehreren Elektronikkomponenten wird durch ein im Pumpenraum herrschendes Druckgefälle erzeugt, indem das Kühlfluid der Kühlstruktur 30 aus einem Pumpenraumbereich höheren Drucks zugeführt und von der Kühlstruktur 30 in einen Pumpenraumbereich demgegenüber geringeren Drucks zurückgeführt wird.

Im Ausführungsbeispiel sind die Gehäuseabschnitte 10, 20 und 40 sowie die Kühlstruktur 30 separat voneinander gefertigte Strukturen, die zur Bildung des Gehäuses miteinander gefügt sind. Dabei ist der Pumpenraum-Abschnitt 20 an einer Stirnseite des Motorraum-Abschnitts 10 mit diesem gefügt, beispielsweise mittels Schraubverbindung. An der gegenüberliegenden anderen Stirnseite des Motorraum-Abschnitts 10 sind die Kühlstruktur 30 und der Elektronikraum-Abschnitt 40 mit dem Motorraum-Abschnitt 10 gefügt, beispielsweise mittels Schraubverbindung. Dabei ist der Elektronikraum-Abschnitt 40 über die Kühlstruktur 30 mit dem Motorraum-Abschnitt 10 gefügt.

Figur 2 ist eine axiale Sicht auf den Pumpenraum-Abschnitt 20. Durch den Fluideintritt 21 ist ein im Pumpenraum drehbar aufgenommenes Förderrad 1 erkennbar. Das Förderrad 1 ist in Radialbauweise mit ebenfalls erkennbaren Förderschaufeln 2 ausgeführt. Es handelt sich somit um einen Radialförderrad, das bei Drehantrieb Fluid am Fluideintritt 21 in axialer Richtung ansaugt, mit seinen Schaufeln 2 in die radiale und tangentiale Richtung umlenkt und über den zumindest im Wesentlichen tangentialen Fluidaustritt 22 abfördert.

In Figur 2 sind zwei gerade Längsschnittlinien A-A und B-B eingetragen, die sich in der Längsachse des Gehäuses schneiden. In Umfangsrichtung um die Gehäuselängsachse wird im Umfangsbereich des Längsschnitts A-A Fluid aus dem Pumpenraumbereich höheren Drucks abgezweigt. Im Umfangsbereich des Längsschnitts B-B wird das abgezweigte Fluid nach Durchströmen der Kühlstruktur 30 in den Pumpenraumbereich geringeren Drucks zurückgeführt.

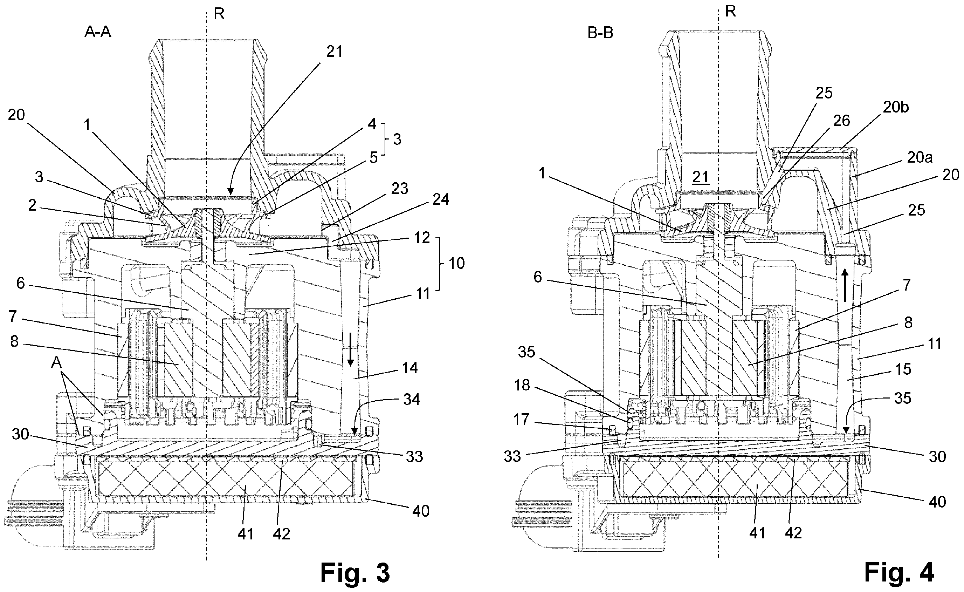

Die Figuren 3 und 4 zeigen die Längsschnitte A-A und B-B. Im Längsschnitt A-A der Figur 3 erstreckt sich eine Fluidzuführung vom Pumpenraumbereich höheren Drucks zur Kühlstruktur 30 und im Längsschnitt B-B der Figur 4 erstreckt sich eine Fluidrückführung von der Kühlstruktur 30 in den Pumpenraumbereich geringeren Drucks.

Das Förderrad 1 ist im Pumpenraum um eine Pumpendrehachse R drehbar angeordnet. Das Förderrad 1 weist eine stirnseitige Saugseite auf, die dem Fluideintritt 21 axial zugewandt ist. Der Fluideintritt 21 ist ein zur Drehachse R zumindest im Wesentlichen orthogonaler Strömungsquerschnitt unmittelbar stromauf des Förderrads 1. An seinen Schaufeln 2 weist das Förderrad 1 an der Saugseite eine Deckstruktur 3 auf, die sich über 360° um die Pumpendrehachse R erstreckt und die Schaufeln 2 in einem Umfangsstreifen um den Fluideintritt 21 überdeckt. Die Deckstruktur 3 bildet mit dem Gehäuseabschnitt 20 einen Laufspalt, der die Saugseite des Förderrads 1 vom Pumpenraumbereich höheren Drucks trennt. Der Pumpenraumbereich höheren Drucks umfasst insbesondere einen Umfangsbereich des Pumpenraums an der radialen Peripherie des Förderrads 1 nahe des Fluidaustritts 22 (Figur 2). Die Deckstruktur 3 weist eine in Bezug auf die Pumpendrehachse R axial erstreckte Umfangswand 4 und eine radial und in Umfangsrichtung erstreckte Stirnwand 5 auf, die aneinander anschließen. Der Gehäuseabschnitt 20 weist einen korrespondierend geformten Innenumfang auf, so dass zwischen diesem Innenumfang des Gehäuseabschnitts 20 und der Deckstruktur 3 ein enger Laufspalt erhalten wird, der dem Außenumfang der Deckstruktur 3 folgend einen axialen Laufspaltabschnitt und hieran in Richtung auf den Pumpenraumbereich höheren Drucks anschließend einen radialen Laufspaltabschnitt aufweist.

Die Pumpe-Motor-Einheit umfasst einen elektrischen Antriebsmotor, der im Motorraum angeordnet ist und einen Stator 7 und einen Rotor 8 aufweist, der um eine Motordrehachse drehbar gelagert ist. Der Antriebsmotor 7, 8 ist koaxial zum Förderrad 1 angeordnet, so dass die Pumpendrehachse R zugleich die Motordrehachse ist und nachfolgend auch nur als Drehachse R bezeichnet wird. Der Rotor 8 ist drehunbeweglich mit einer Antriebswelle 6, der Motorwelle, verbunden. Das Förderrad 1 ist ebenfalls drehunbeweglich mit der Antriebswelle 6 verbunden. Die Antriebswelle 6 ist im Gehäuse um die Drehachse R drehbar gelagert und wird mittels der Drehlagerung radial und auch axial gestützt. Die Drehachse R ist zugleich die vorstehend erwähnte Gehäuselängsachse. Sie erstreckt sich zentral in Längsrichtung durch das Gehäuse.

Der Gehäuseabschnitt 10 weist eine Gehäuseumfangswand 11 und eine Gehäusestirnwand 12 auf. Die Gehäuseumfangswand 11 und die Gehäusestirnwand 12 sind gemeinsam topfförmig, indem die Gehäusestirnwand 12 einen Topfboden und die Gehäuseumfangswand 11 eine Topfumfangswand bilden. Die Gehäuseumfangswand 11 umgibt den Motorraum und umgibt insbesondere auch den Antriebsmotor 7, 8. Die Antriebswelle 6 ist im Bereich der Gehäusestirnwand 12 um die Drehachse R drehbar gelagert. Die Gehäusestirnwand 12 kann den Pumpenraum fluidisch vom Motorraum trennen, so dass der Antriebsmotor 7, 8 wie bevorzugt als Trockenläufer gebildet sein kann.

Soweit im Elektronikraum wärmeerzeugende Elektronikkomponenten 41 angeordnet sind, die der Kühlung bedürfen, können diese Elektronikkomponenten 41 wärmeleitend mit der Kühlstruktur 30 verbunden sein. Im Ausführungsbeispiel ist die eine oder sind die mehreren zu kühlenden Elektronikkomponenten 41 an der vom Motorraum abgewandten Rückseite der Kühlstruktur 30 angeordnet und über eine Wärmeleitstruktur 42, beispielsweise ein Wärmeleitpad, und/oder eine Wärmeleitpaste wärmeleitend mit der Kühlstruktur 30 gekoppelt. Der Gehäuseabschnitt 40 umgibt den Elektronikraum und deckelt den Elektronikraum an der Rückseite ab.

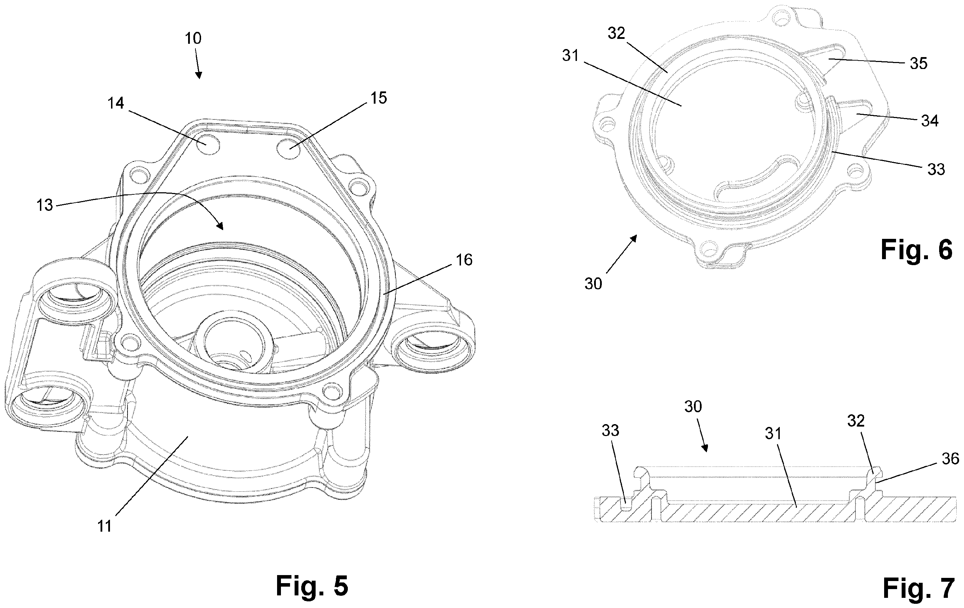

Die Figuren 5 und 6 zeigen den Gehäuseabschnitt 10 und die Kühlstruktur 30 jeweils separat, vor dem Zusammenbau des Gehäuses. Die Gehäuseumfangswand 11 läuft an ihrer vom Förderrad 1 axial abgewandten Rückseite unter Ausbildung einer Motorraum-Öffnung 13 offen aus. Die Motorraum-Öffnung 13 und der Innenquerschnitt der Gehäuseumfangswand 11 sind so groß, dass der Rotor 8 und der Stator 7 über die Motorraum-Öffnung 13 axial in den Motorraum bis in die vorgesehene Einbauposition eingeführt werden können.

Die Kühlstruktur 30 weist eine Kühlstruktur-Stirnwand 31 und eine Kühlstruktur-Umfangswand 32 auf, die axial von der Kühlstruktur-Stirnwand 31 vorragt. Die Kühlstruktur-Stirnwand 31 weist einen Durchgang für Verbindungsleitungen auf, die den Antriebsmotor, im Ausführungsbeispiel den mit elektrischen Spulen versehenen Stator 7, mit der im Elektronikraum aufgenommenen Elektronik, vorzugsweise einer elektronischen Steuerung für den Antriebsmotor, verbinden. In axialer Draufsicht gesehen liegt der Durchgang innerhalb der Kühlstruktur-Umfangswand 32.

Im gefügten Zustand, den die Figuren 3 und 4 zeigen, bilden die Gehäuseumfangswand 11 und die Kühlstruktur 30 einen Fügespalt A, der sich um die Gehäuselängsachse bzw. Drehachse R und dabei "über Eck" erstreckt. Die Kühlstruktur 30 ragt mit ihrer Kühlstruktur-Umfangswand 32 durch die Motorraum-Öffnung 13 in den Motorraum, so dass die Gehäuseumfangswand 11 und die Kühlstruktur-Umfangswand 32 axial überlappen und in der axialen Überlappung einen radialen Fügespalt bilden. Dieser Fügespalt wird als radialer Fügespalt oder radialer Fügespaltabschnitt bezeichnet, weil sich die axial überlappenden Umfangswände 11 und 32 über den Fügespalt radial gegenüberliegen. Die Kühlstruktur-Stirnwand 31 ragt über die Kühlstruktur-Umfangswand 32 radial nach außen vor und überlappt im vorragenden Stirnwandbereich im gefügten Zustand radial mit einer Stirnfläche der Gehäuseumfangswand 11. Die Gehäuseumfangswand 11 und die Kühlstruktur-Stirnwand 31 bilden in der radialen Überlappung einen um die Drehachse R erstreckten axialen Fügespalt. Dieser Fügespalt wird als axialer Fügespalt oder axialer Fügespaltabschnitt bezeichnet, weil sich die Kühlstruktur-Stirnwand 32 und die zugewandte Stirnfläche der Gehäuseumfangswand 11 in der radialen Überlappung axial gegenüberliegen. Im ersten Ausführungsbeispiel bilden der radiale Fügespaltabschnitt und der axiale Fügespaltabschnitt zusammen den "über Eck" erstreckten Fügespalt A.

Im Fügespalt A erstreckt sich ein Kühlkanal 33 um die Drehachse R. Der Kühlkanal 33 ist im ersten Ausführungsbeispiel als eine Vertiefung gebildet, die sich in der Kühlstruktur-Stirnwand 31 außen um die Kühlstruktur-Umfangswand 32 (Figur 6) und im gefügten Zustand zumindest im Wesentlichen nur im axialen Fügespaltabschnitt erstreckt. Der Kühlkanal 33 wird im axialen Fügespaltabschnitt radial außen mittels eines äußeren Dichtelements 17 und im radialen Fügespaltabschnitt radial innen, zum Motorraum hin, mittels eines inneren Dichtelements 18 abgedichtet. Das äußere Dichtelement 17 kann ein als Axialdichtung wirkender Dichtring und das innere Dichtelement 18 kann ein als Radialdichtung wirkender Dichtring sein.

Figur 3 zeigt die Fluidzuführung vom Pumpenraumbereich höheren Drucks bis zum Kühlkanal 33. Die Fluidzuführung wird von einem Zuführkanal gebildet, der einen stromabwärtigen Zuführkanalabschnitt 14 und einen stromaufwärtigen Zuführkanalabschnitt 24 umfasst. Der stromabwärtige Zuführkanalabschnitt 14 mündet in einen Kühlkanaleinlass 34 des Kühlkanals 33. Der stromaufwärtige Zuführkanalabschnitt 24 erstreckt sich bis zum Pumpenraumbereich höheren Drucks und ist über eine Ausleitöffnung 23 mit diesem Pumpenraumbereich verbunden. Der Kanalabschnitt 24 mündet unmittelbar in den Kanalabschnitt 14. Der stromabwärtige Zuführkanalabschnitt 14 erstreckt sich peripher vom Antriebsmotor 7, 8 durch die Gehäuseumfangswand 11. Er kann sich insbesondere axial gerade durch die Gehäuseumfangswand 11 erstrecken und an zwei voneinander abgewandten Stirnflächen der Gehäuseumfangswand 11 münden.

Der stromaufwärtige Zuführkanalabschnitt 24 wird radial innen vom Motorraum-Abschnitt 10 und radial außen vom Pumpenraum-Abschnitt 20 begrenzt, d.h. die beiden Gehäuseabschnitte 10 und 20 definieren gemeinsam den Kanalabschnitt 24. Das Gehäuse kann im Bereich des Gehäuseabschnitts 20 eine lokale, axial vorragende Kuppel 20a aufweisen, um den Rückführkanal, im Ausführungsbeispiel den Rückführkanalabschnitt 25, am Förderrad 1 vorbei zum Laufspalt zu führen. Die Kuppel 20a weist eine Öffnung auf, um die Herstellung eines winkelig zur Drehachse R bis zur Rückführöffnung 26 erstreckten Endabschnitts des Rückführkanals 15, 25 zu erleichtern. Ein Deckelelement 20b verschließt diese Öffnung. Die Kuppel 20a und deren Position in Bezug auf den Pumpenraum sind auch in den Figuren 1 und 2 erkennbar.

In Figur 4 ist die Fluidrückführung vom Kühlkanal 33 bis in den Pumpenraumbereich geringeren Drucks dargestellt. Die Fluidrückführung wird von einem Rückführkanal gebildet, der einen stromaufwärtigen Rückführkanalabschnitt 15 und hieran anschließend einen stromabwärtigen Rückführkanalabschnitt 25 umfasst. Der Kanalabschnitt 15 schließt sich an seinem stromaufwärtigen Ende an einen Kühlkanalauslass 35 des Kühlkanals 33 an und mündet an seinem stromabwärtigen Ende in den weiterführenden Kanalabschnitt 25. Der stromaufwärtige Kanalabschnitt 15 erstreckt sich peripher vom Antriebsmotor 7, 8 durch die Gehäuseumfangswand 11. Er kann sich insbesondere axial gerade durch die Gehäuseumfangswand 11 erstrecken und an zwei voneinander abgewandten Stirnflächen der Gehäuseumfangswand 11 münden.

Der stromabwärtige Rückführkanalabschnitt 25 erstreckt sich vom stromaufwärtigen Rückführkanalabschnitt 15 bis zu einer Rückführöffnung 26, die im Pumpenraum-Abschnitt 20 gebildet ist und der Deckstruktur 3 des Förderrads 1 über den Laufspalt gegenüberliegt. Der Rückführkanal 15, 25 übergreift von der Kühlstruktur 33 aus gesehen das Förderrad 1, um das vom Kühlkanal 33 zurückströmende Fluid an der Saugseite des Förderrads 1 in den Laufspalt von Förderrad 1 und Gehäuse bzw. Pumpenraum-Abschnitt 20 zu leiten und dort die Deckstruktur 3 mit dem Fluiddruck des zurückströmenden Fluids zu beaufschlagen. Das zurückströmende Fluid übt auf die Deckstruktur 3 und dadurch auf das Förderrad 1 eine Axialkraft und/oder eine Radialkraft aus. Die vom zurückströmenden Fluid ausgeübte Kraft dient der Kompensation von Kräften, die im Pumpenbetrieb aufgrund der Förderung des Fluids auf das Förderrad 1 wirken und in dessen Drehlagerung aufgenommen werden müssen. Die Kompensation wird nachfolgend noch beschrieben.

Der Kühlkanal 33 kann sich in axialer Verlängerung des Zuführkanalabschnitts 14 erstrecken, so dass dieser direkt, übergangslos, in den Kühlkanal 33 mündet. Der Kühlkanaleinlass wäre einfach ein Abschnitt, vorzugsweise Endabschnitt, des Kühlkanals 33. Der Zuführkanalabschnitt 14 kann stattdessen auch peripher des Kühlkanals 33 in den Kühlkanaleinlass 34 münden, wie dies im Ausführungsbeispiel verwirklicht ist. Der Kühlkanaleinlass 34 erstreckt sich in axialer Draufsicht gesehen daher vom Kühlkanal 33 nach radial außen, um die Verbindung zum Zuführkanalabschnitt 14 herzustellen. Der Kühlkanaleinlass 34 ist eine radiale Aufweitung des Kühlkanals 33, wobei sich der Kühlkanal 33 vom Kühlkanaleinlass 34 absetzen, beispielsweise axial tiefer als der Kühlkanaleinlass 34 sein kann.

Der Kühlkanal 33 kann sich in axialer Verlängerung des Rückführkanalabschnitts 15 erstrecken, so dass dieser direkt, übergangslos, in den Kühlkanal 33 mündet. Der Kühlkanalauslass wäre einfach ein Abschnitt, vorzugsweise Endabschnitt, des Kühlkanals 33. Der Rückführkanalabschnitt 15 kann stattdessen auch peripher des Kühlkanals 33 in den Kühlkanalauslass 35 münden, wie dies im Ausführungsbeispiel verwirklicht ist. Der Kühlkanalauslass 35 erstreckt sich in axialer Draufsicht gesehen daher vom Kühlkanal 33 nach radial außen, um die Verbindung zum Rückführkanalabschnitt 15 herzustellen. Der Kühlkanalauslass 35 ist eine radiale Aufweitung des Kühlkanals 33, wobei sich der Kühlkanal 33 vom Kühlkanalauslass 35 absetzen, beispielsweise axial tiefer als der Kühlkanalauslass 35 sein kann.

Im Betrieb der Pumpe-Motor-Einheit wird das Fluid vom rotierenden Förderrad 1 am Fluideintritt 21 angesaugt, mittels der Schaufeln 2 nach radial außen und tangential umgelenkt, so dass um die Drehachse R eine Drehströmung entsteht, und über den Fluidaustritt 22 zumindest im Wesentlichen tangential abgefördert. Zur Kühlung der einen oder der mehreren Elektronikkomponenten 41 wird von diesem Hauptstrom im Pumpenraumbereich höheren Drucks über die Ausleitöffnung 23 ein Teilstrom abgezweigt. Der abgezweigte Teilstrom durchströmt in Zuströmrichtung nacheinander die Zuführkanalabschnitte 24 und 14 und strömt über den Kühlkanaleinlass 34 in den im Fügespalt A ringförmig um die Drehachse R erstreckten Kühlkanal 33. Im Kühlkanal 33 strömt das Fluid um die Drehachse R in Richtung auf den Kühlkanalauslass 35 und von dort in den Rückführkanalabschnitt 15, durchströmt den Rückführkanalabschnitt 15 und den sich in Rückströmrichtung anschließenden Rückführkanalabschnitt 25 und strömt durch die Rückführöffnung 26 in den Laufspalt von Gehäuse und Förderrad 1. In den Figuren 3 und 4 sind die Zuströmrichtung und die Rückströmrichtung jeweils durch einen Strömungspfeil angedeutet.

Zur Abdichtung des Fügespalts A ist noch nachzutragen, dass sich das äußere Dichtelement 17 im axialen Fügespaltabschnitt um die Drehachse R und die Motorraum-Öffnung 13 erstreckt und dabei auch den Kühlkanaleinlass 34 und den Kühlkanalauslass 35 umfasst. Das Dichtelement 17 kann in einer entsprechend verlaufenden Aufnahme der Kühlstruktur 30 oder, wie im Ausführungsbeispiel, in einer in Figur 5 erkennbaren stirnseitigen Aufnahme 16 der Gehäuseumfangswand 11 aufgenommen sein. Die Aufnahme 16 läuft an der Stirnfläche der Gehäuseumfangswand 11, mit der die Gehäuseumfangswand 11 den Fügespalt A axial begrenzt, um die Drehachse R und die Motorraum-Öffnung 13 um und umfasst dabei auch die Mündungen der Kanalabschnitte 14 und 15 sowie im gefügten Zustand den Kühlkanaleinlass 34 und den Kühlkanalauslass 35. Das innere Dichtelement 18 erstreckt sich im radialen Fügespaltabschnitt um die Drehachse R. Das Dichtelement 18 kann in einer entsprechend verlaufenden Aufnahme der Gehäuseumfangswand 11 oder, wie im Ausführungsbeispiel, in einer Aufnahme der Kühlstruktur 30 aufgenommen sein. Figur 7 zeigt die Kühlstruktur 30 in einem Längsschnitt, in dem der Kühlkanal 33 und die besagte Aufnahme 36 für das innere Dichtelement 18 erkennbar sind. Die Aufnahme 36 erstreckt sich am Außenumfang der Kühlstruktur-Umfangswand 32, mit der die Kühlstruktur 30 im gefügten Zustand den Fügespalt A radial innen begrenzt.

Der Kühlkanal 33 erstreckt sich, wie bereits erwähnt, ringförmig um die Drehachse R. Grundsätzlich kann der Kühlkanal 33 ein in sich geschlossener Kühlkanalring sein, also über einen Bogenwinkel von 360° um die Drehachse R um- und in sich zurücklaufen. In derartigen Ausführungen würde sich das zuströmende Fluid am Kühlkanaleinlass 34 verzweigen und in beide Umfangsrichtungen um die Drehachse R in Richtung auf den Kühlkanalauslass 35 strömen, wobei die relativen Massenströme von den Strömungswiderständen der beiden Zweige abhingen. Vorteilhafter ist es, wenn sich der Kühlkanal 33 vom Kühlkanaleinlass 34 aus in nur eine Umfangsrichtung um die Drehachse R bis zum Kühlkanalauslass 35 erstreckt, wie dies in den Ausführungsbeispielen verwirklicht ist. Vorteilhaft ist, wenn sich der Kühlkanal 33 vom Kühlkanaleinlass 34 über einen Bogenwinkel von wenigstens 270° oder wenigstens 300° um die Drehachse R bis zum Kühlkanalauslass 35 erstreckt. Weiter ist es vorteilhaft, wenn der Kühlkanaleinlass 34 in Umfangsrichtung um die Drehachse R vom Kühlkanalauslass 35 einen Winkelabstand von höchstens 90° oder höchstens 60° hat, wobei der Winkelabstand zwischen den einander nächstgelegenen Stellen am Rand des Kühlkanaleinlasses 34 und des Kühlkanalauslasses 35 gemessen wird.

Der Kühlkanaleinlass 34 und der Kühlkanalauslass 35 können in einem gewissen Abstand nebeneinander liegen, wie dies beispielhaft in Figur 6 erkennbar ist. Zur fluidischen Trennung kann zwischen dem Kühlkanaleinlass 34 und dem Kühlkanalauslass 35 ein Dichtelement angeordnet sein, beispielsweise ein Dichtring, der eines aus Kühlkanaleinlass 34 und Kühlkanalauslass 35 umgibt und dadurch vom anderen trennt. Vorteilhafter ist es, wenn der Fügespalt A zwischen dem Kühlkanaleinlass 34 und dem Kühlkanalauslass 35 so gestaltet ist, dass eine fluidische Trennung allein über einen dichtenden Kontakt der Fügepartner 11 und 30 sichergestellt wird. Es sollte in Umfangsrichtung eine Dichtstrecke von wenigstens 3 mm oder wenigstens 5 mm vorhanden sein. So kann in Umfangsrichtung um die Drehachse R zwischen den Enden des Kühlkanals 33 und insbesondere zwischen dem Kühlkanaleinlass 34 und dem Kühlkanalauslass 35 eine Dichtfläche bzw. Dichtstrecke verbleiben, die ausreicht, um die Enden des Kühlkanals 33 voneinander und den Kühlkanaleinlass 34 vom Kühlkanalauslass 35 durch den Kontakt der Fügepartner 11 und 30 fluidisch zu trennen. Zur Schaffung einer ausreichenden Dichtstrecke kann der Kühlkanaleinlass 34 in Umfangsrichtung um die Drehachse R vom Kühlkanalauslass 35 einen Winkelabstand von wenigstens 10° oder wenigstens 20° oder wenigstens 30° aufweisen.

Der Zuführkanalabschnitt 14 und der Rückführkanalabschnitt 15 erstrecken sich korrespondierend zum Kühlkanaleinlass 34 und Kühlkanalauslass 35 mit einem in Umfangsrichtung gemessenen Winkelabstand nebeneinander durch die Gehäuseumfangswand 11. Der Winkelabstand der beiden Kanalabschnitte 14, 15 wird zwischen den einander nächstgelegenen Randstellen der Kanalabschnitte 14, 15 gemessen und beträgt bevorzugt höchstens 90° oder höchstens 60°, kann andererseits aber wenigstens 10° oder wenigstens 20° oder wenigstens 30° betragen.

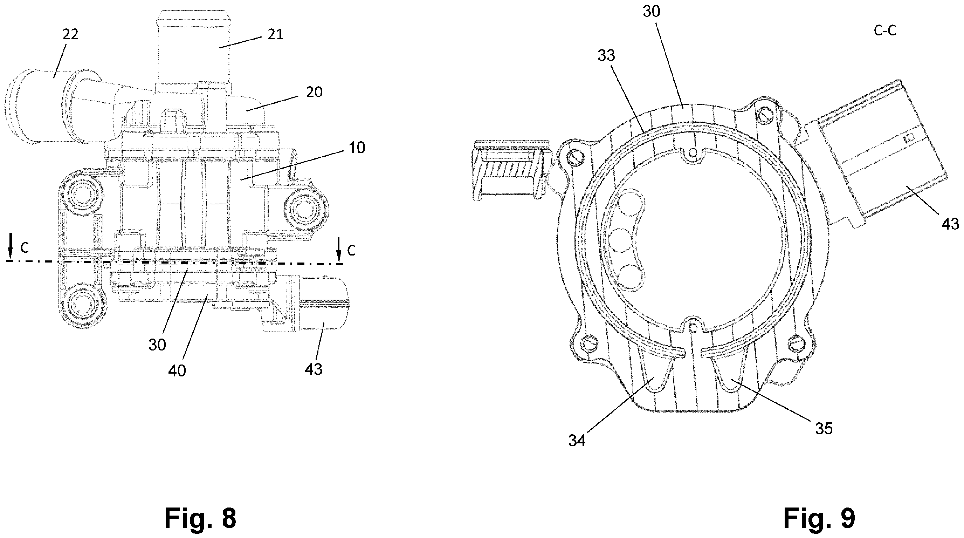

In der Seitenansicht der Figur 8 ist die Schnittlinie für den Querschnitt C-C eingetragen, der in Figur 9 dargestellt ist. Der Querschnitt C-C erstreckt sich orthogonal zur Drehachse R durch den Kühlkanal 33, den Kühlkanaleinlass 34 und den Kühlkanalauslass 35, d.h. der Querschnitt C-C erstreckt sich unmittelbar unter der Stirnfläche, mit der die Kühlstruktur 30 im gefügten Zustand den axialen Spaltabschnitt des Fügespalts A begrenzt. Wie insbesondere in Figur 9 erkennbar, kann sich der Kühlkanal 33 in vorteilhafter Ausführung vom Kühlkanaleinlass 34 aus über einen Bogenwinkel von mehr als 320° um die Drehachse R bis zum Kühlkanalauslass 35 erstrecken. Im Fügespalt A unmittelbar der Fügepartner 11 und 30 verbleibt dennoch eine ausreichend große Dichtstrecke für die fluidische Trennung von Kühlkanaleinlass 34 und Kühlkanalauslass 35.

Soweit der Zuführkanal 14, 24 und der Rückführkanal 15, 25 durch die Gehäuseumfangswand 11 verlaufen, erstrecken sie sich peripher vom Antriebsmotor 7, 8, so dass sie beispielsweise als einfache axiale Durchgangsbohrungen in der Gehäuseumfangswand 11 bereitgestellt werden können. Vorteilhaft ist ferner, wenn der Kühlkanaleinlass 34 und der Kühlkanalauslass 35 radial außerhalb eines virtuellen kleinsten Hüllkreiszylinders gelegen sind, der den Antriebsmotor 7, 8 über seinen äußeren Umfang einhüllt. Der Kühlkanal 33 kann sich vorteilhafterweise über seinen gesamten Verlauf radial außerhalb des gedachten Hüllkreiszylinders erstrecken, nicht zuletzt, um trotz der konstruktiv einfachen Bereitstellung des Kühlkanals 33 eine möglichst große Fläche der Kühlstruktur 30 mit dem der Kühlung dienenden Fluid in Wärmeaustauschkontakt zu bringen.

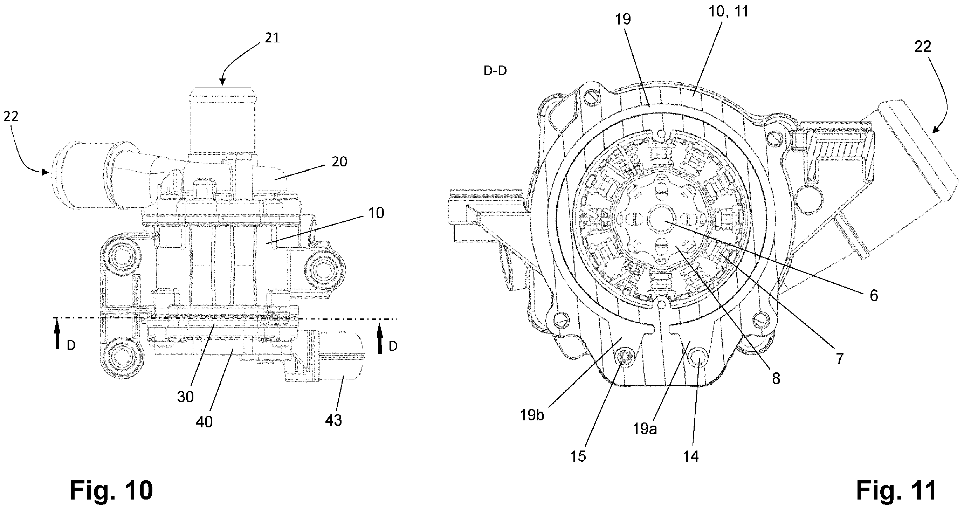

Figur 10 zeigt eine Pump-Motor-Einheit eines zweiten Ausführungsbeispiels in einer Seitenansicht auf das Gehäuse der Einheit. Eingetragen ist die Schnittlinie eines Querschnitts D-D der Pumpe-Motor-Einheit.

Figur 11 zeigt den Querschnitt D-D, der sich orthogonal zur Drehachse R in unmittelbarer Nähe des axialen Fügespaltabschnitts von Gehäuseumfangswand 11 und Kühlstruktur 30 durch die Gehäuseumfangswand 11 erstreckt. Im zweiten Ausführungsbeispiel ist der Kühlkanal nicht als Vertiefung in der Stirnwand der Kühlstruktur 30, sondern an der Stirnfläche der Gehäuseumfangswand 11 gebildet und wird zur Unterscheidung vom ersten Ausführungsbeispiel als Kühlkanal 19 bezeichnet. Der Kühlkanal 19 ist spiegelbildlich zum Kühlkanal 33 des ersten Ausführungsbeispiels geformt und erstreckt sich über einen Bogenwinkel von mehr als 270° oder mehr als 300° vom Kühlkanaleinlass 19a bis zum Kühlkanalauslass 19b. Der Kühlkanaleinlass 19a und der Kühlkanalauslass 19b sind zweckmäßigerweise ebenfalls in der Stirnfläche der Gehäuseumfangswand 11 geformt. Die Kühlstruktur 30 kann daher eine einfach plane Kühlstruktur-Stirnwand aufweisen, mit der sie den Kühlkanal 19, den Kühlkanaleinlass 19a und den Kühlkanalauslass 19b axial begrenzt. Von den erläuterten Unterschieden abgesehen, entspricht die Pumpe-Motor-Einheit des zweiten Ausführungsbeispiels der Einheit des ersten Ausführungsbeispiels, so dass auf die dortigen Ausführungen verwiesen wird.

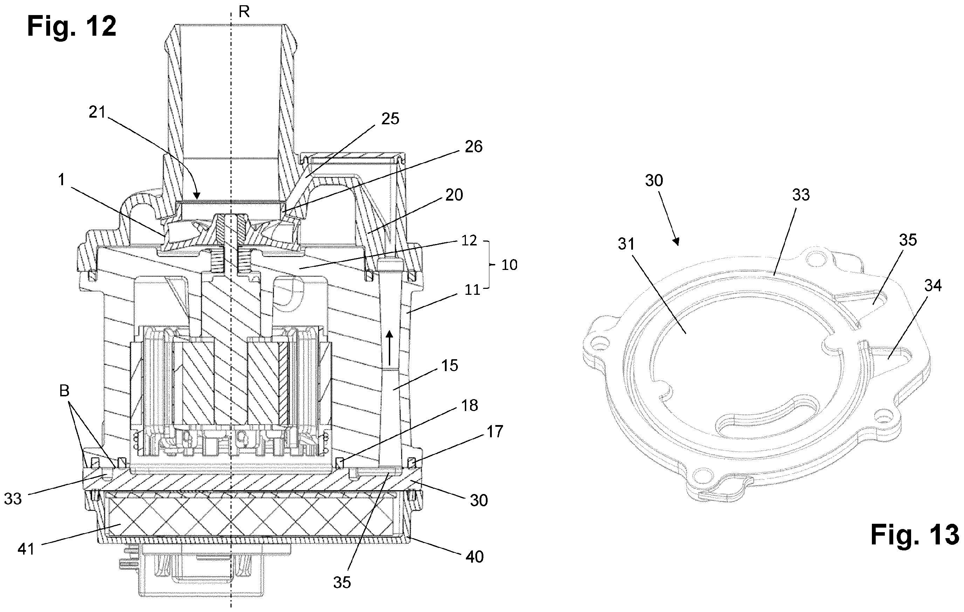

Die Figuren 12 und 13 zeigen eine Pumpe-Motor-Einheit eines dritten Ausführungsbeispiels in einem Längsschnitt und die Kühlstruktur 30 des dritten Ausführungsbeispiels in einer Isometrie. Im Unterschied zum ersten und zweiten Ausführungsbeispiel bilden die Gehäuseumfangswand 11 und die Kühlstruktur 30 einen rein axialen Fügespalt B, in dem die Gehäuseumfangswand 11 und die Kühlstruktur 30 nur radial überlappen. Der Kühlkanal 33, der Kühlkanaleinlass 34 und der Kühlkanalauslass 35 sind wie im ersten und im zweiten Ausführungsbeispiel im axialen Fügespalt gebildet und wie im ersten Ausführungsbeispiel jeweils als axiale Vertiefung an der Kühlstruktur-Stirnwand 31 geformt. In einer Modifikation können der Kühlkanal 33, der Kühlkanaleinlass 34 und der Kühlkanalauslass 35 dem zweiten Ausführungsbeispiel entsprechend stattdessen jeweils als axiale Vertiefung an der Stirnseite der Gehäuseumfangswand 11 geformt sein.

Der Kühlkanal 33 wird im Fügespalt B radial außen mittels eines äußeren Dichtelements 17 und radial innen, zum Motorraum hin, mittels eines inneren Dichtelements 18 abgedichtet. Die beiden Dichtelemente 17 und 18 können als Axialdichtung wirkende Dichtringe sein. Von den erläuterten Unterschieden abgesehen entspricht die Pumpe-Motor-Einheit des dritten Ausführungsbeispiels den Einheiten des ersten und des zweiten Ausführungsbeispiels, so dass auf die dortigen Ausführungen verwiesen werden kann.

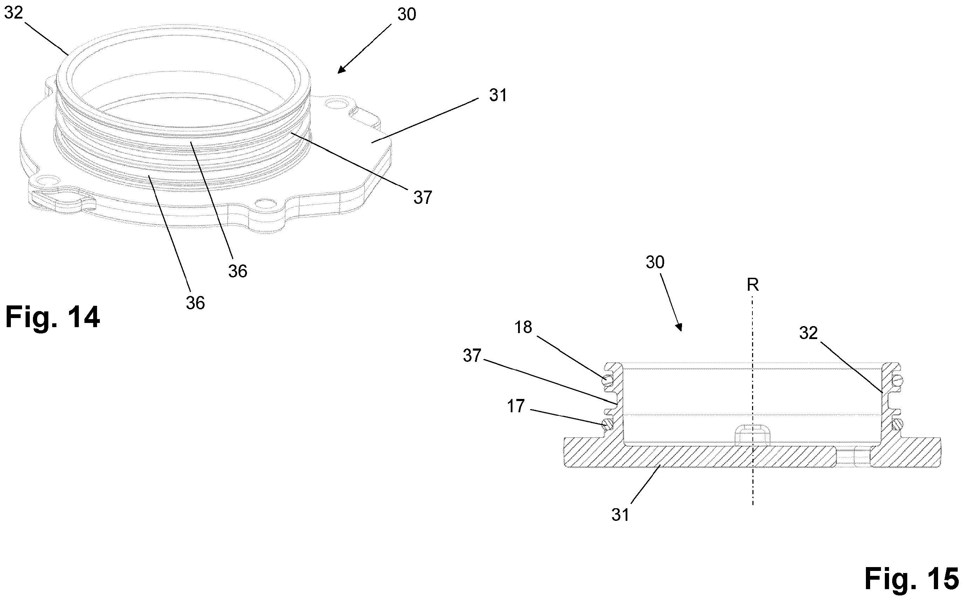

Die Figuren 14 und 15 zeigen eine Kühlstruktur 30 für eine Pumpe-Motor-Einheit eines vierten Ausführungsbeispiels. Im vierten Ausführungsbeispiel erstreckt sich ein Kühlkanal 37 im radialen Fügespaltabschnitt des Fügespalts A, der sich wie im ersten und zweiten Ausführungsbeispiel "über Eck" erstreckt und daher weitgehend dem Fügespalt des ersten Ausführungsbeispiels entspricht. Auch der Kühlkanal 37 läuft nicht vollständig um, bildet also keinen in sich geschlossenen Kühlkanalring, sondern erstreckt sich um die Drehachse R der Pumpe-Motor-Einheit nur über einen Bogenwinkel von weniger als 360°, aber von wenigstens 270° oder wenigstens 300° vom nicht dargestellten Kühlkanaleinlass bis zum ebenfalls nicht dargestellten Kühlkanalauslass. Die Anschlüsse an den durch die Gehäuseumfangswand erstreckten Zuführkanal und den ebenfalls durch die Gehäuseumfangswand erstreckten Rückführkanal, nämlich der Kühlkanaleinlass und der Kühlkanalauslass, sind vorteilhafterweise im Bereich der Gehäuseumfangswand geformt.

Der Kühlkanal 37 wird, wie im Längsschnitt der Figur 15 dargestellt, mittels eines äußeren Dichtelements 17 und eines inneren Dichtelements 18 an beiden Kanalseiten abgedichtet. Die Dichtelemente 17 und 18 können insbesondere jeweils ein als Radialdichtung wirkender Dichtring sein, die jeweils in einer Aufnahme 36 der Kühlstruktur 30 aufgenommen sind, wobei die Aufnahmen 36 und entsprechend die Dichtelemente 17 und 18 am Außenumfang der Kühlstruktur-Umfangswand 32 gebildet bzw. angeordnet sind. Von den erläuterten und aus den Figuren 14 und 15 ersichtlichen Unterschieden abgesehen, entspricht die Pumpe-Motor-Einheit des vierten Ausführungsbeispiels den zuvor gezeigten und beschriebenen Pumpe-Motor-Einheiten, so dass auf die dortigen Ausführungen im Weiteren verwiesen wird.

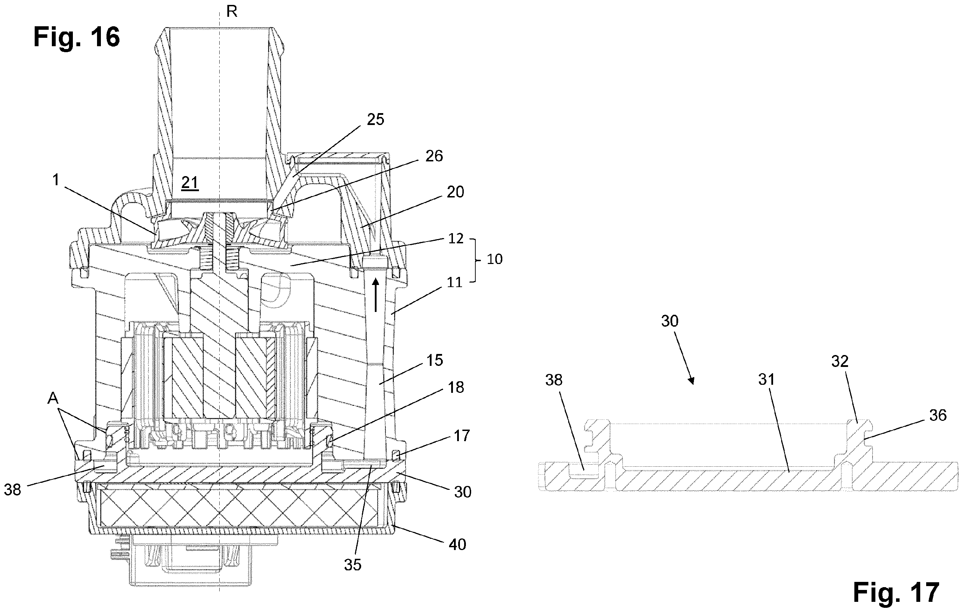

Figur 16 zeigt eine Pumpe-Motor-Einheit eines fünften Ausführungsbeispiels in einem Längsschnitt und Figur 17 zeigt die Kühlstruktur des fünften Ausführungsbeispiels ebenfalls im Längsschnitt.

Die Pumpe-Motor-Einheit des fünften Ausführungsbeispiels unterscheidet sich von der Einheit des ersten Ausführungsbeispiels nur dadurch, dass in dem über Eck erstreckten Fügespalt A ein Kühlkanal 38 gebildet ist, der sich ebenfalls über Eck erstreckt. Dabei entspricht die Gehäuseumfangswand 11 auch im Bereich des Fügespalts A der Umfangswand 11 des ersten Ausführungsbeispiels. Die Kühlstruktur 30 ist hingegen modifiziert. Der Kühlkanal 38, der sich um die Kühlstruktur-Umfangswand 32 ringförmig erstreckt, setzt sich aus einer axialen Vertiefung an der den Fügespalt A axial begrenzenden Stirnfläche der Kühlstruktur-Stirnwand 31 und einer hieran anschließenden radialen Vertiefung am Außenumfang der Kühlstruktur-Umfangswand 32 zusammen. Der Kühlkanal 38 erstreckt sich somit sowohl in den axialen Fügespaltabschnitt als auch in den radialen Fügespaltabschnitt des Fügespalts A. Die Kühlstruktur-Umfangswand 32 ist im Vergleich zum ersten Ausführungsbeispiel axial um das Maß verlängert, mit dem sich der Kühlkanal 38 in den radialen Fügespaltabschnitt erstreckt. Ansonsten entsprechen die Kühlstruktur 30 und auch die Pumpe-Motor-Einheit des fünften Ausführungsbeispiels dem ersten Ausführungsbeispiel.

Im ersten bis sechsten Ausführungsbeispiel umgibt die Gehäuseumfangswand 11 den Motorraum und endet axial vor dem Elektronikraum mit der Motorraumöffnung 13 (Figur 5). Die Kühlstruktur 30 bildet in diesen Ausführungsbeispielen einen Motorraumdeckel und der Elektronikraum-Abschnitt 40 wird als ein separat gefertigter Gehäuseabschnitt bereitgestellt und gefügt, so dass er den Elektronikraum nicht nur an der rückwärtigen Stirnseite begrenzt, sondern auch über den Umfang umgibt.

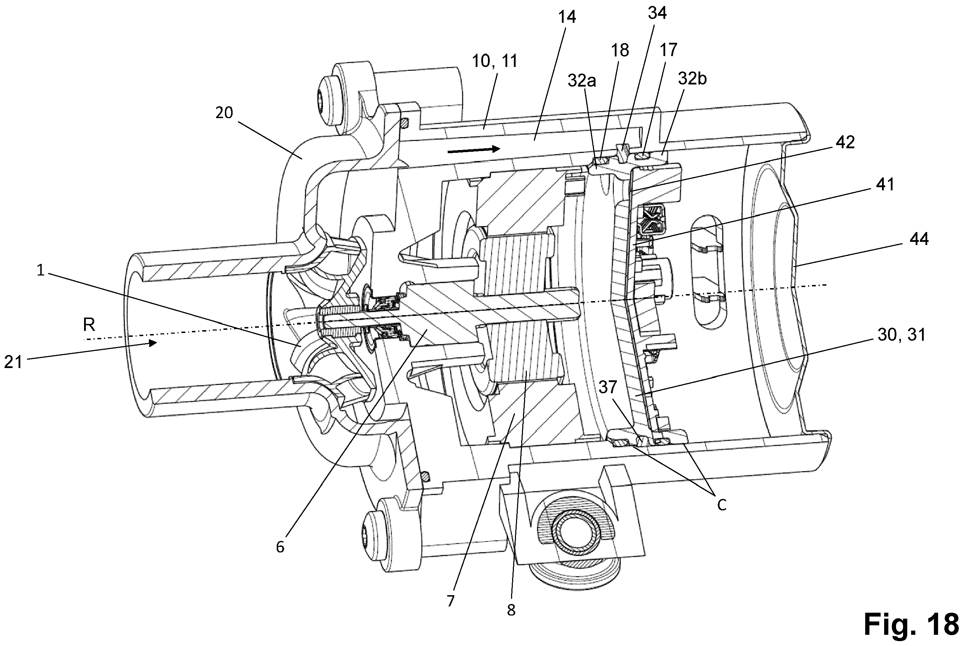

Figur 18 zeigt eine Pumpe-Motor-Einheit eines sechsten Ausführungsbeispiels in einer Längsschnittisometrie. Die Gehäuseumfangswand 11 des sechsten Ausführungsbeispiels ist im Vergleich zu den anderen Ausführungsbeispielen axial verlängert. Sie umgibt nicht nur den Motorraum, sondern auch den Elektronikraum. Die Kühlstruktur 30 bildet dementsprechend keinen Motorraumdeckel, sondern ist in die verlängerte Gehäuseumfangswand 11 bis in die in Figur 18 eingenommene Fügeposition axial eingeschoben. Allerdings trennt sie auch im sechsten Ausführungsbeispiel den Elektronikraum vom Motorraum, indem sie verhindert, dass Schmutzpartikel und/oder Feuchtigkeit aus dem Motorraum in den Elektronikraum dringen können.

Die Kühlstruktur 30 umfasst eine Kühlstruktur-Stirnwand 31, eine Kühlstruktur-Umfangswand 32a, die von der Kühlstruktur-Stirnwand 31 axial in den Motorraum vorragt, und eine weitere Kühlstruktur-Umfangswand 32b, die von der Kühlstruktur-Stirnwand 31 axial in die andere Richtung in den Elektronikraum vorragt. Die beiden Kühlstruktur-Umfangswände 32a und 32b erstrecken sich ringförmig um die Kühlstruktur-Stirnwand 31. Im gefügten Zustand, den Figur 18 zeigt, überlappen die Kühlstruktur-Umfangswände 32a und 32b jeweils in axialer Richtung mit der Gehäuseumfangswand 11 und bilden mit dieser somit jeweils einen radialen Fügespaltabschnitt eines insgesamt radialen Fügespalts C. Über die axiale Länge des Fügespalts C weist die Gehäuseumfangswand 11 einen glatten Innenumfang auf.

Am Außenumfang weist die Kühlstruktur 30 eine radiale Vertiefung auf, die sich von dem in Figur 18 erkennbaren Kühlkanaleinlass 34 bis zu dem im Schnitt nicht enthaltenen Kühlkanalauslass ringförmig um die Drehachse R erstreckt und den Kühlkanal 37 bildet. Zur Erstreckung des Kühlkanals 37 gelten die Ausführungen, die bereits zu den anderen Ausführungsbeispielen gemacht wurden. So kann sich der Kühlkanal 37 vom Kühlkanaleinlass bis zum Kühlkanalauslass beispielsweise über einen Bogenwinkel von wenigstens 270° oder wenigstens 300° und weniger als 360° in nur eine Umfangsrichtung erstrecken. Hinsichtlich des Anschlusses an den Kühlkanaleinlass und den Kühlkanalauslass wird auf die Ausführungen zum vierten Ausführungsbeispiel (Figuren 14 und 15) verwiesen.

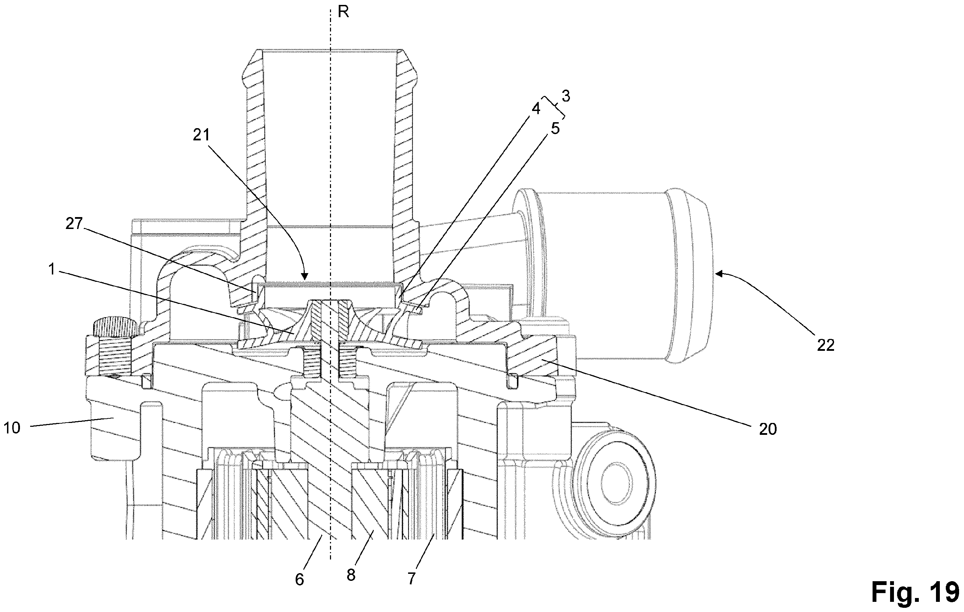

Figur 19 zeigt eine Pumpe-Motor-Einheit eines siebten Ausführungsbeispiels in einem Längsschnitt. Dargestellt ist nur der vordere Bereich mit dem Pumpenraum. Im hinteren Bereich, insbesondere im Fügebereich von Gehäuseumfangswand 11 und Kühlstruktur 30 und der Verwirklichung des Kühlkanals, kann die Pumpe-Motor-Einheit wahlweise jedem der vorstehend beschriebenen anderen Ausführungsbeispiele entsprechen. Ein Unterschied zu den bislang beschriebenen Ausführungsbeispielen besteht nur in der Fluidrückführung und dort auch nur im Bereich des Laufspalts von Förderrad 1 und Gehäuseabschnitt 20, indem dieser der Deckstruktur 3 gegenüberliegend eine lokale Aufweitung 27 aufweist. Die Aufweitung 27 weitet den Laufspalt radial auf, allerdings nicht vollständig umlaufend. Sie erstreckt sich nur über einen gewissen Bogenwinkel um die Drehachse. Sie kann einen Ringsektor bilden, der dem Umfangsabschnitt 4 der Deckstruktur 3 radial gegenüberliegt. Die Aufweitung 27 kann sich, wie im Ausführungsbeispiel verwirklicht, axial bis zum Laufspalt erstrecken, so dass sie der Stirnwand 5 der Deckstruktur 3 axial genüberliegt und den Laufspalt somit über ihre Winkelerstreckung auch axial aufweitet.

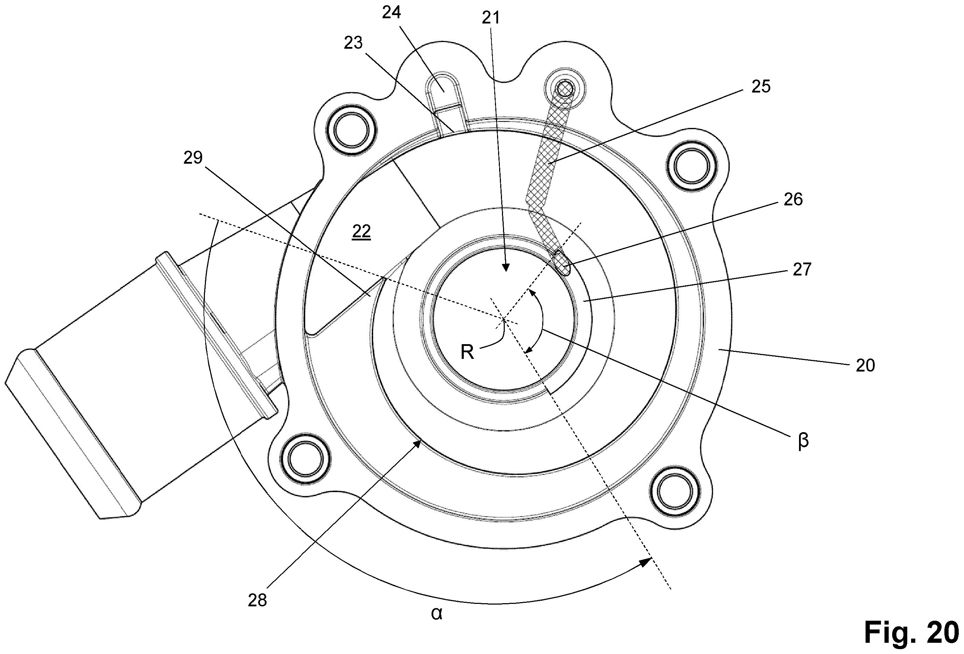

Figur 20 ist eine axiale Sicht auf die Innenseite des Gehäuseabschnitts 20. Der Gehäuseabschnitt 20 umgibt den Pumpenraum und das darin angeordnete Förderrad 1 über den Umfang und begrenzt den Pumpenraum auch an seiner vom Motorraum axial abgewandten Stirnseite. Der Gehäuseabschnitt 20 umfasst den Fluideintritt 21 und den Fluidaustritt 22. Der Gehäuseabschnitt 20 begrenzt axial und um die Drehachse R einen Sammelraum, der sich um das Förderrad 1 erstreckt und radial außen von einem Umfang 28 des Pumpenraum-Abschnitts 20 begrenzt wird. Der Umfang 28 erstreckt spiralförmig um die Drehachse R, wobei sich der auf die Drehachse R gemessene Radius der Umfangswand 28 von der Spitze einer Spiralenzunge 29 ausgehend in Drehrichtung des Förderrads 1 kontinuierlich bis zum Fluidaustritt 22 vergrößert. Als Fluidaustritt 22 wird ein Strömungsquerschnitt des Sammelraums verstanden, der sich von der Spitze der Spiralenzunge 29 nach radial außen bis zum spiralförmigen Umfang 28 erstreckt. Das Fluid strömt am Fluidaustritt 22 in zumindest im Wesentlichen tangentialer Richtung aus dem Sammelraum. An den Fluidaustritt 22 schließt sich ein Auslassstutzen an, der sich zumindest im Wesentlichen tangential zum Sammelraum erstreckt, so dass das abströmende Fluid in tangential gerader Richtung weiterströmt.

In Figur 20 sind die Ausleitöffnung 23 und der sich hieran in Strömungsrichtung des abgezweigten Fluids anschließende Kanalabschnitt 24 des Zuführkanals erkennbar. Die Ausleitöffnung 23 befindet sich in der Nähe des Fluidaustritts 22, in Drehrichtung des Förderrads 1 kurz vor dem Fluidaustritt 22, im radial äußeren Bereich des Sammelraums und somit im Pumpenraumbereich höheren Drucks. Die Ausleitöffnung 23 weist von der Zungenspitze der Spiralenzunge 29 gegen die Drehrichtung einen Winkelabstand von weniger als 90° auf. Im Ausführungsbeispiel ist die Ausleitöffnung 23 am Innenumfang des Gehäuseabschnitts 20 gebildet, so dass das Fluid für die integrierte Kühlung an der Peripherie der sich im Pumpenbetrieb einstellenden Drehströmung abgezweigt wird.

Die Rückführöffnung 26 befindet sich radial weiter innen als die Ausleitöffnung 23 und in Bezug auf die sich einstellende Drehströmung stromaufwärts der Ausleitöffnung 23. Der über die Rückführöffnung 26 in den Pumpenraum mündende Kanalabschnitt 25 des Rückführkanals ist in Figur 19 kenntlich gemacht, obgleich er nicht im Pumpenraum, sondern das Förderrad 1 übergreifend nur außerhalb des Pumpenraums verläuft.

Die Rückführöffnung 26 ist so angeordnet, dass das an der Rückführöffnung 26 in den Laufspalt von Förderrad 1 und Gehäuse strömende Fluid auf das Förderrad 1, d.h. auf dessen Deckstruktur 3, eine radiale Kompensationskraft ausübt, die einer aufgrund der Förderung des Fluids auf das Förderrad 1 wirkenden Radialkraft entgegenwirkt und diese wenigstens zu einem Teil kompensiert. Unterteilt man den Pumpenraum in axialer Draufsicht gesehen an der Drehachse R gedanklich in eine erste Hemisphäre, die den Fluidaustritt 22 enthält, und eine zweite Hemisphäre, in der sich die Rückführöffnung 26 befindet, so ist die radiale Kompensationskraft in Richtung auf die erste Hemisphäre gerichtet.

Bezogen auf die Umfangsrichtung um die Drehachse R weist die Rückführöffnung 26 von der Zungenspitze der Spiralenzunge 29 in Drehrichtung einen Winkelabstand von wenigstens 90° oder wenigstens 120° auf. Gegen die Drehrichtung kann der Winkelabstand mehr als 60° oder wenigstens 90° betragen. Vorteilhaft ist, wenn der Winkelabstand in Drehrichtung größer als der Winkelabstand gegen die Drehrichtung ist, wobei dies auch im Zusammenhang mit der Anordnung der Ausleitöffnung 23 und der Fluidzufühung und Fluidrückführung der integrierten Kühlung steht.

Um die Radialkraftkompensation zu verbessern, weist der Gehäuseabschnitt 20 im Bereich des Laufspalts die Aufweitung 27 auf, die den Laufspalt in einem Umfangsbereich, der der Zungenspitze der Spiralenzunge 29 über die Drehachse R gesehen gegenüberliegt, radial und auch axial weitet. In der Draufsicht weist die Aufweitung die Form eines Ringsektors auf.

Der Kanalabschnitt 25 des Rückführkanals mündet an der Rückführöffnung 26 im Bereich der Aufweitung 27. Im Ausführungsbeispiel mündet er an einem bezüglich der Strömungsrichtung der Drehströmung stromabwärtigen Umfangsende der Aufweitung 27. Die Aufweitung 27 erstreckt sich vom stromabwärtigen Umfangsende gegen die Drehrichtung des Förderrads 1 über einen Bogenwinkel β bis zu einem stromaufwärtigen Umfangsende. Das stromaufwärtige Umfangsende weist von der Zungenspitze der Spiralenzunge 29 einen Winkelabstand α auf, wobei der Bogenwinkel α von der Zungenspitze in Drehrichtung des Förderrads 1 bis zum stromaufwärtigen Umfangsende der Aufweitung 27 gemessen wird. Auch für die Aufweitung 27 gilt in vorteilhaften Ausführungen, dass sie in und gegen die Drehrichtung des Förderrads 1 von der Zungenspitze der Spiralenzunge 29 einen Winkelabstand α von jeweils wenigstens 90° aufweist. Im Ausführungsbeispiel liegt der Winkelabstand α zwischen 90° und 180°. Die Umfangserstreckung der Aufweitung 27, als Bogenwinkel β gemessen, kann mehr als 40° oder mehr als 60° betragen. Andererseits sollte ihre Umfangserstreckung maximal 180° oder maximal 150° betragen.

Die zuvor beschriebenen Ausführungsbeispiele können hinsichtlich des Pumpenraums und insbesondere der Ausleitöffnung 23 und/oder der Rückführöffnung 26 sowie des Gehäuseabschnitts 20 wie im siebten Ausführungsbeispiel gebildet sein. Zur Beeinflussung der radialen und/oder axialen Kompensationskraft können sie auch die Aufweitung 27 aufweisen. Weisen sie die Aufweitung 27 nicht auf, kann die Rückführöffnung 26 um einen gewissen Bogenwinkel gegen die Drehrichtung des Förderrads 1 versetzt angeordnet werden, wobei der Winkelversatz höchstens so groß wie die Winkelerstreckung β der Aufweitung 27 sein sollte. Die versetzte Rückführöffnung 26 würde sich im Umfangsbereich zwischen den Umfangsenden der Aufweitung 27 des siebten Ausführungsbeispiels befinden.

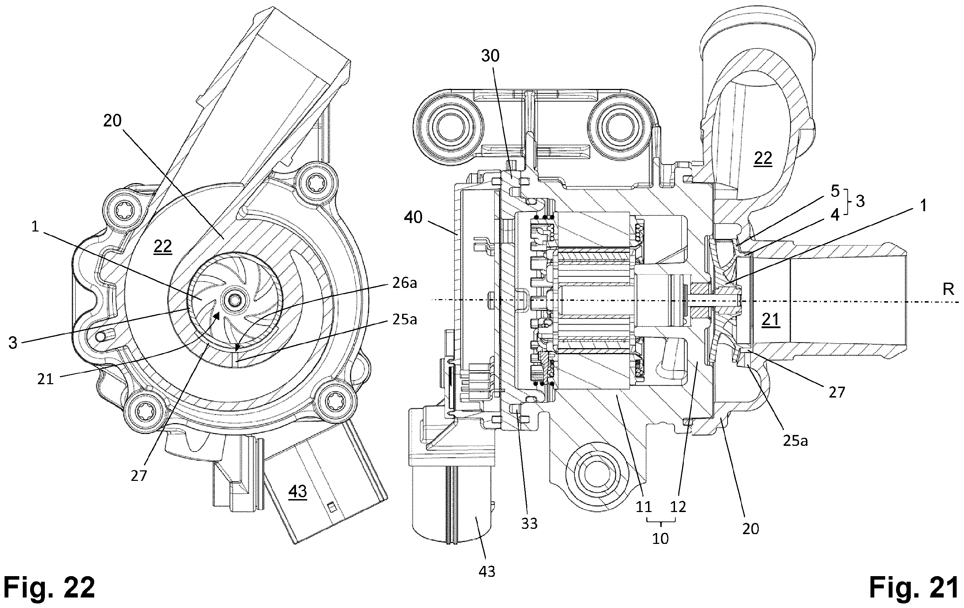

Die Figuren 21 bis 24 zeigen eine Pumpe-Motor-Einheit eines achten Ausführungsbeispiels, bei dem eine Kompensationskraft zur Entlastung der Drehlagerung des Förderrads 1 nicht durch das zurückströmende Fluid der integrierten Kühlung, sondern mittels direkt aus dem Pumpenraumbereich höheren Drucks abgezweigten Fluids vorgenommen wird.

Figur 21 zeigt die Pumpe-Motor-Einheit des achten Ausführungsbeispiels in einem Längsschnitt. Im Längsschnitt ist ein Verbindungskanal 25a erkennbar, der sich vom Pumpenraumbereich höheren Drucks auf kurzem Wege durch den Gehäuseabschnitt 20 bis in den Laufspalt von Förderrad 1 und Gehäuseabschnitt 20 erstreckt. Der Laufspalt weist die zum siebten Ausführungsbeispiel beschriebene Aufweitung 27 auf. Der Verbindungskanal 25a mündet in die Aufweitung 27 und übt im Laufspalt eine radiale und/oder axiale

Kompensationskraft auf die Deckstruktur 3 und somit auf das Förderrad 1 aus, wie vorstehend bereits erläutert wird.

Figur 22 zeigt die Pumpe-Motor-Einheit in einem Querschnitt, der sich orthogonal zur Drehachse R nahe des saugseitigen Stirnendes der Deckstruktur 3 axial auf der Höhe des Verbindungskanals 25a durch den Umfangsabschnitt 4 der Deckstruktur 3 erstreckt. Die Deckstruktur 3 ist daher als Ring erkennbar. Erkennbar sind ferner die Aufweitung 27, der kurze gerade Verbindungskanal 25a und die Kanalöffnung 26a, an der der Verbindungskanal 25a im Umfangsbereich der Aufweitung 27 in den Laufspalt mündet. Die Kanalöffnung 26a ist in Bezug auf die Umfangsrichtung in einem mittleren Bereich der Aufweitung 27 gelegen, so dass über den Verbindungskanal 25a in den Laufspalt geleitetes Fluid höheren Drucks in der Aufweitung 27 nach links und rechts um die Deckstruktur 3 verteilt wird, um die radiale Kompensationskraft und vorzugsweise auch eine gewisse axiale Kompensationskraft auf die Deckstruktur 3 auszuüben.

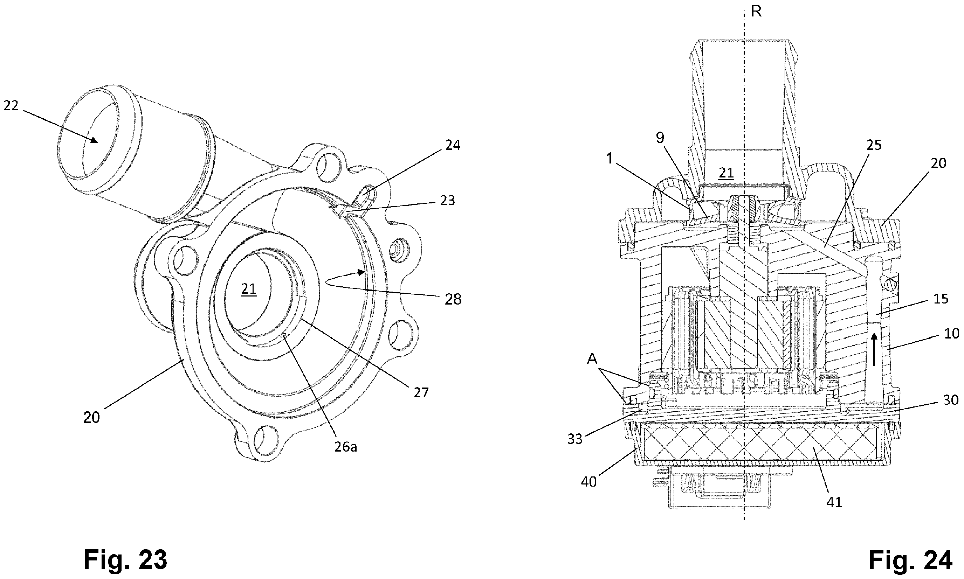

Figur 23 zeigt den Gehäuseabschnitt 20 des achten Ausführungsbeispiels in einer isometrischen Sicht auf die Innenseite, die im gefügten Zustand dem Förderrad 1 zugewandt ist. In dieser Isometrie sind wieder der spiralförmige Umfang 28 des Pumpenraums, die dem Fluidaustritt 22 nahe Ausleitöffnung 23, die Aufweitung 27 und vom Verbindungskanal 25a die Kanalöffnung 26a erkennbar.

Figur 24 zeigt die Pumpe-Motor-Einheit des achten Ausführungsbeispiels in einem Längsschnitt, in dem sich der Rückführkanal 15, 25 der integrierten Kühlung erstreckt. Im Unterschied zu den anderen Ausführungsbeispielen wird das vom Kühlkanal 33 zurückströmende Fluid nicht zur Kompensation der durch die Förderung des Fluids bedingten Kräfte benutzt. Vielmehr wird das zurückströmende Fluid über den Kanalabschnitt 25 an der Rückseite des Förderrads 1, unterhalb einer Tragstruktur des Förderrads 1, zurückgeführt.

Von den erläuterten Unterschieden abgesehen, entspricht die Motor-Pumpe-Einheit dem ersten Ausführungsbeispiel, insbesondere hinsichtlich der Kühlstruktur 30, des Fügespalts A und des Kühlkanals 33, so dass auf die dortigen Ausführungen verwiesen wird. Hinsichtlich des Pumpenraums entspricht die Motor-Pumpe-Einheit abgesehen von der direkten Verbindung über den Verbindungskanal 25a dem siebten Ausführungsbeispiel, so dass hierauf in Bezug auf den Pumpenraum verwiesen wird.

### Bezugszeichen:

- 1: Förderrad
- 2: Schaufeln
- 3: Deckstruktur
- 4: Umfangswand
- 5: Stirnwand
- 6: Antriebswelle
- 7: Stator
- 8: Rotor
- 9: Tragstruktur
- 10: Gehäuseabschnitt, Motorraum-Abschnitt
- 11: Gehäuseumfangswand
- 12: Gehäusestirnwand
- 13: Öffnung
- 14: Zuführkanalabschnitt
- 15: Rückführkanalabschnitt
- 16: Aufnahme
- 17: Dichtelement
- 18: Dichtelement
- 19: Kühlkanal
- 19a: Kühlkanaleinlass
- 19b: Kühlkanalauslass
- 20: Gehäuseabschnitt, Pumpenraum-Abschnitt
- 20a: Kuppel
- 20b: Deckelelement
- 21: Fluideintritt
- 22: Fluidaustritt
- 23: Ausleitöffnung
- 24: Zuführkanalabschnitt
- 25: Rückführkanalabschnitt
- 25a: Rückführkanal
- 26: Rückführöffnung
- 26a: Kanalöffnung
- 27: Aufweitung
- 28: spiralförmiger Gehäuseumfang
- 29: Spiralenzunge
- 30: Kühlstruktur
- 31: Stirnwand
- 32: Abragung, Umfangswand
- 32a: Abragung, Umfangswand
- 32b: Abragung, Umfangswand
- 33: Kühlkanal
- 34: Kühlkanaleinlass
- 35: Kühlkanalauslass
- 36: Aufnahme
- 37: Kühlkanal
- 38: Kühlkanal
- 39: -
- 40: Gehäuseabschnitt, Elektronikraum-Abschnitt
- 41: Elektronikkomponente
- 42: Wärmeleitpad
- 43: Anschluss

- A: Fügespalt
- B: Fügespalt
- C: Fügespalt
- R: Längsachse, Drehachse
- α: Bogenwinkel
- β: Bogenwinkel

## Patentansprüche

1. Pumpe-Motor-Einheit, vorzugsweise zur Förderung einer wasserbasierten Kühlflüssigkeit eines Kraftfahrzeugs, wobei die Pumpe-Motor-Einheit Folgendes umfasst:
1.1 ein Gehäuse mit einem Motorraum, einem Elektronikraum und einem Pumpenraum mit einem Fluideintritt (21) und einem Fluidaustritt (22),
1.2 ein Förderrad (1), das im Pumpenraum drehbar angeordnet ist, um ein Fluid vom Fluideintritt (21) zum Fluidaustritt (22) zu fördern,
1.3 einen im Motorraum angeordneten elektrischen Antriebsmotor (7, 8), der einen Stator (7) und einen drehbaren Rotor (8) für einen Drehantrieb des Förderrads (1) umfasst, und
1.4 eine Elektronikkomponente (41), die im Elektronikraum angeordnet ist, wobei das Gehäuse Folgendes umfasst:
1.5 eine Gehäuseumfangswand (11), die sich um eine Längsachse (R) des Gehäuses erstreckt und den Antriebsmotor (7, 8) umgibt,
1.6 eine Kühlstruktur (30), die axial zwischen dem Motorraum und dem Elektronikraum angeordnet und mit der Gehäuseumfangswand (11) gefügt ist, und
1.7 einen ringförmigen Kühlkanal (33; 37; 38; 19) mit einem Kühlkanaleinlass (34; 19a), der mit einem Pumpenraumbereich höheren Drucks verbunden ist, und einem Kühlkanalauslass (35; 19b), der mit einem Pumpenraumbereich geringeren Drucks verbunden ist, um einen Teil des Fluids zur Kühlung der Elektronikkomponente (41) vom Pumpenraumbereich höheren Drucks über den Kühlkanal (33; 37; 38; 19) zum Pumpenraumbereich geringeren Drucks zu leiten,
1.8 wobei die Gehäuseumfangswand (11) mit der Kühlstruktur (30) um die Längsachse (R) einen Fügespalt (A; B; C) bildet und
1.9 der Kühlkanal (33; 37; 38; 19) im Bereich des Fügespalts (A; B; C) um die Längsachse (R) erstreckt und abgedichtet ist.

2. Pumpe-Motor-Einheit nach dem vorhergehenden Anspruch, die einen Zuführkanal (14, 24) umfasst, der den Kühlkanal (33; 37; 38; 19) mit dem Pumpenraumbereich höheren Drucks verbindet und in den Kühlkanaleinlass (34: 19a) mündet, und einen Rückführkanal (15, 25), der den Kühlkanal (33; 37; 38; 19) mit dem Pumpenraumbereich geringeren Drucks verbindet und sich an den Kühlkanalauslass (35; 19b) anschließt, wobei sich der Zuführkanal (14, 24) und der Rückführkanal (15, 25) jeweils bis zum Kühlkanal (33; 37; 38; 19) peripher vom Antriebsmotor (7, 8) durch die Gehäuseumfangswand (11) erstrecken.

3. Pumpe-Motor-Einheit nach einem der vorhergehenden Ansprüche, wobei sich der Kühlkanal (33; 37; 38; 19) vom Kühlkanaleinlass (34; 19a) bis zum Kühlkanalauslass (35; 19b) im Fügespalt (A; B; C) über einen Winkel von wenigstens 270° um die Längsachse (R) erstreckt.

4. Pumpe-Motor-Einheit nach einem der vorhergehenden Ansprüche, wobei sich der Kühlkanal (33; 37; 38; 19) vom Kühlkanaleinlass (34; 19a) aus in nur eine Strömungsrichtung bis zum Kühlkanalauslass (35; 19b) erstreckt.

5. Pumpe-Motor-Einheit nach einem der vorhergehenden Ansprüche, wobei der Fügespalt (A) einen radialen Fügespaltabschnitt und einen axialen Fügespaltabschnitt aufweist und eine Vertiefung in einer den radialen Fügespaltabschnitt begrenzenden Umfangswand oder eine Vertiefung in einer den axialen Fügespaltabschnitt begrenzenden Stirnwand der Kühlstruktur (30) oder der Gehäuseumfangswand (11) den Kühlkanal (33; 38; 19) bildet, so dass sich der Kühlkanal (38) über Eck in beide Fügespaltabschnitte erstreckt.

6. Pumpe-Motor-Einheit nach einem der vorhergehenden Ansprüche, wobei die Gehäuseumfangswand (11) mit einer Gehäuseumfangswand-Stirnfläche und die Kühlstruktur (30) mit einer Kühlstruktur-Stirnfläche einen ringförmigen axialen Fügespalt (A; B) bilden und ein Dichtelement (17), vorzugsweise ein als Axialdichtung wirkender Dichtring, den axialen Fügespalt (A; B) um die Längsachse (R) radial außen abdichtet.

7. Pumpe-Motor-Einheit nach einem der vorhergehenden Ansprüche, wobei die Kühlstruktur (30) eine axiale Abragung (32; 32a) aufweist, die die Gehäuseumfangswand (11) umgibt oder von der Gehäuseumfangswand (11) umgeben wird, wobei die Gehäuseumfangswand (11) und die Kühlstruktur (30) einen um die axiale Abragung (32; 32a) und/oder um die Gehäuseumfangswand (11) ringförmig umlaufenden radialen Fügespalt (A; C) radial begrenzen, und wobei ein Dichtelement (18), vorzugsweise ein als Radialdichtung wirkender Dichtring, den radialen Fügespalt (A; C) um die Längsachse (R) abdichtet.

8. Pumpe-Motor-Einheit nach einem der vorhergehenden Ansprüche, wobei das Förderrad (1) ein um eine Pumpendrehachse (R) drehbares Radialförderrad ist und Schaufeln (2) sowie an einer dem Fluideintritt zugewandten Saugseite eine Deckstruktur (3) aufweist, die mit dem Gehäuse einen saugseitigen Laufspalt bildet.

9. Pumpe-Motor-Einheit nach dem vorhergehenden Anspruch, umfassend einen Rückführkanal (15, 25), der den Kühlkanal (33; 37; 38; 19) mit dem Pumpenraumbereich geringeren Drucks verbindet und im Pumpenraumbereich geringeren Drucks an einer Rückführöffnung (26) des Gehäuses endet, die in einem um die Längsachse (R) erstreckten Laufspalt gebildet ist, den das Förderrad (1) und das Gehäuse begrenzen, wobei die Rückführöffnung (26) über den Laufspalt der Deckstruktur (3) des Förderrads (1) gegenüberliegt, so dass das in den Laufspalt zurückgeführte Fluid auf das Förderrad (1) eine axiale Gegenkraft zu einer durch die Förderung des Fluids auf das Förderrad (1) wirkenden Axialkraft und/oder eine radiale Gegenkraft zu einer durch die Förderung des Fluids auf das Förderrad (1) wirkenden Radialkraft ausübt.

10. Pumpe-Motor-Einheit nach einem der vorhergehenden Ansprüche, die einen Rückführkanal (15, 25) umfasst, der den Kühlkanal (33; 37; 38; 19) mit dem Pumpenraumbereich geringeren Drucks verbindet und im Pumpenraumbereich geringeren Drucks an einer Rückführöffnung (26) des Gehäuses endet, die in einem Laufspalt gebildet ist, den das Förderrad (1) und das Gehäuse begrenzen, wobei das Gehäuse im Bereich des Laufspalts eine Aufweitung (27) aufweist, die sich in Umfangsrichtung über einen Bogenwinkel (β) von wenigstens 20° und höchstens 120° um das Förderrad (1) erstreckt und den Laufspalt radial und/oder axial weitet.

11. Pumpe-Motor-Einheit nach einem der zwei unmittelbar vorhergehenden Ansprüche, wobei
11.1 das Förderrad (1) ein Radialförderrad ist,
11.2 das Gehäuse einen Sammelraum mit einem Umfang (28) aufweist, der sich von einer freien Zungenspitze einer Spiralenzunge (29) spiralförmig um das Förderrad (1) erstreckt, und
11.3 die Aufweitung (27), falls vorhanden, und/oder die Rückführöffnung (26) in und gegen die Drehrichtung des Förderrads (1) über einen Bogenwinkel (α) von mehr als 60° oder mehr als 90° von der Zungenspitze entfernt ist oder sind.

12. Pumpe-Motor-Einheit nach einem der drei unmittelbar vorhergehenden Ansprüche in Kombination mit Anspruch 8, wobei die Aufweitung (27), falls vorhanden, und/oder die Rückführöffnung (26) im Laufspalt der Umfangswand (4) der Deckstruktur (3) radial und/oder der Stirnwand (5) der Deckstruktur (3) axial zugewandt gegenüberliegt.

13. Pumpe-Motor-Einheit nach einem der vorhergehenden Ansprüche, wobei
13.1 das Förderrad (1) ein Radialförderrad ist,
13.2 das Gehäuse einen Sammelraum mit einem Umfang (28) aufweist, der sich von einer freien Zungenspitze einer Spiralenzunge (29) spiralförmig um das Förderrad (1) erstreckt,
13.3 der Kühlkanal (33; 37; 38; 19) über einen Zuführkanal (14, 24) mit dem Pumpenraumbereich höheren Drucks verbunden ist, und
13.4 der Zuführkanal (14, 24) im Pumpenraumbereich höheren Drucks an einer Ausleitöffnung (23) am spiralförmigen Umfang (28) des Sammelraums mündet.

14. Pumpe-Motor-Einheit nach einem der vorhergehenden Ansprüche, wobei die Gehäuseumfangswand (11) nach Anspruch 1 eine stirnseitige Motorraum-Öffnung (13) aufweist, und die Kühlstruktur (30) einen Motorraumdeckel (30) bildet, der die Motorraum-Öffnung (13) verschließt und den Elektronikraum vom Motorraum trennt.

15. Pumpe-Motor-Einheit nach einem der Ansprüche 1 bis 13, wobei die Gehäuseumfangswand (11) den Motorraum und die Kühlstruktur (30) umgibt, in beide axiale Richtungen über die Kühlstruktur (30) hinausragt und sich ein Innenumfang der Gehäuseumfangswand (11) und ein Außenumfang der Kühlstruktur (30) unter Bildung eines radialen Fügespalts (C) gegenüberliegen, in dem der Kühlkanal (38) gebildet ist, wobei die Gehäuseumfangswand (11) vorzugsweise auch den Elektronikraum umgibt.
